# EUROPEAN PATENT SPECIFICATION

(11) **EP 3 605 883 B1**
(45) Date of publication and mention of the grant of the patent: **17.11.2021**
(21) Application number: 18777577.0
(22) Date of filing: 30.03.2018
(51) Int. Cl.: H04B 10/61, H04L 27/227

(54) **METHOD AND APPARATUS FOR CORRECTING PHASE JUMP**
VERFAHREN UND VORRICHTUNG ZUR KORREKTUR EINES PHASENSPRUNGS
PROCÉDÉ ET APPAREIL DE CORRECTION DE SAUT DE PHASE

(30) Priority: 30.03.2017 CN 201710203367
(43) Date of publication of application: 05.02.2020
(73) Proprietor: Sanechips Technology Co., Ltd., Shenzhen, Guangdong 518055 (CN)
(72) Inventor: LI, Yunpeng, Shenzhen Guangdong 518057 (CN); CAO, Nanshan, Shenzhen Guangdong 518057 (CN); HUANG, Yuanliang, Shenzhen Guangdong 518057 (CN)
(74) Representative: Deambrogi, Edgardo
(86) International application number: PCT/CN2018/081381
(87) International publication number: WO 2018/177423

(56) References cited:
- EP-A1- 2 892 158
- EP-A1- 2 999 181
- EP-A1- 3 145 112
- WO-A1-2012/132103
- CN-A- 103 929 394
- CN-A- 104 767 702
- CN-A- 106 301 666

## Description

### Technical Field

The disclosure relates to the technical field of Digital Signal Processing (DSP), for example, to a phase jump correction method and device.

### Background

In recent years, with the continuous improvement of the degree of social informatization, data services based on Internet Protocol (IP) have grown explosively. In particular, end-to-end video playing and downloading, Internet Protocol Television (IPTV) networks, mobile Internet, large private networks and other new applications from different fields are becoming increasingly popular, and the transmission bandwidth requirements of metropolitan area networks and backbone networks continue to grow. An optical fiber communication technology has become a better choice for solving the backbone network capacity pressure due to its advantages of ultra-high speed, large capacity, long distance, high anti-interference performance, low cost, etc.

Thanks to the great advancement of a digital signal processing (DSP) technology, a high-speed data acquisition technology and related optical devices, optical fiber communication systems based on a digital coherent detection technology have become a research hot spot in the field of optical communications. The combination of the digital coherent detection technology and a multi-level signal modulation format and Polarization Multiplexing (PM) technology can multiply the system communication capacity. A Polarization-Multiplexed Quadrature Phase Shift Keying (PM-QPSK) modulation format has higher spectral efficiency, and a nonlinear optical fiber damage during signal transmission is not severe as M-Quadrature Amplitude Modulation (M-QAM), that is, QPSK modulation signals have a simpler transmitter structure and a simple carrier phase recovery algorithm than other complex modulation formats. Therefore, the PM-QPSK modulation format stands out among many alternative modulation formats and is the preferred solution for 100G optical transmission networks.

The architecture of a coherent detection optical transmission system receiver generally includes: a front-end photoelectric conversion unit, a digital-to-analog conversion unit, and a back-end DSP unit. The DSP unit mainly includes modules such as dispersion compensation, clock recovery, polarization demultiplexing, frequency offset estimation, Carrier Phase Estimation (CPE), and decision output.

In the coherent detection optical transmission system receiver, when a Local Oscillator (LO) oscillates at a preset frequency, the phase of an oscillating signal between the LO and a carrier changes over time within a line width spectral width by an LO line width factor, thereby resulting in a phase deviation that changes much faster than a frequency offset. The phase deviation covers a circumference and has a non-negligible effect on a phase-modulated signal. Meanwhile, QPSK demodulation is to recover the carrier, usually using a nonlinear carrier phase estimation algorithm such as a biquadratic algorithm or costas, so that in phase recovery, an error value between a recovered phase and a real phase due to phase deviation and nonlinearity may be 0°, 90°, 180° or 270°. This phase jump is called phase blur or Cycle Slip (CS).

In an actual application system, in a case where the CS occurs, the phase estimation value error will reach $\pm \frac{π}{2}$ or *π*, so that the compensated symbol phase is rotated as a whole, resulting that the subsequent symbol continuous errors of a QPSK signal including a current block, until the next phase jump jumps back to the correct phase. That is to say, for the QPSK signal, the subsequent signal is continuously erroneous due to a jump in the middle of data, thus not only causing performance degradation, but also causing great pressure on a subsequent decoding module. Therefore, the phase jump problem is one of the key factors of limiting a QPSK modulated signal from being used in the coherent optical transmission system. A phase jump correction method/device according to the state of the art is known from EP-A-2892158.

### Summary

The disclosure provides a phase jump correction method and device, which can solve the above technical problem, and easily and effectively find phase jump and achieve phase correction.

The disclosure provides a phase jump correction method, which may include:
a receiving end acquires a sending end Training Sequences (TSs) generated by a sending end, and generates receiving end TSs by using a TS generation mode identical to a TS generation mode used at the sending end;
phase value of target TSs is determined according to the acquired sending end TSs and receiving end TSs;
the phase value of the target TSs is modified according to phase values of a plurality of non-target TSs of the receiving end to obtain a modified phase value, wherein the target TSs and the non-target TSs are sending end TSs extracted by the receiving end from service data received from the sending end;
phase jump correction is performed on the service data received from the sending end according to the obtained modified phase value.

The disclosure also provides a phase jump correction device, which may include a generation module, a calculation module, a modification module, and a correction module.

The generation module is configured to generate receiving end TSs by using a TS generation mode identical to a TS generation mode used to generate sending end TSs.

The calculation module is configured to acquire the sending end TSs generated by a sending end, and determine a phase value of target TSs according to the acquired sending end TSs and receiving end TSs.

The modification module is configured to modify, according to phase values of a plurality of non-target TSs, the phase value of the target TS so as to obtain a modified phase value, the target TSs and the non-target TSs are sending end TSs extracted by the receiving end from service data received from the sending end.

The correction module is configured to perform, according to the obtained modified phase value, phase jump correction on the service data received from the sending end.

The phase jump detection and correction method and device provided by the disclosure can easily and effectively find phase jump and achieve phase correction.

### Brief Description of the Drawings

Fig. 1 is a block diagram of a related optical communication digital coherent receiver;
Fig. 2 is a flowchart of a phase jump detection and correction method in an embodiment;
Fig. 3 is a schematic diagram of inserting a TS into service data in an embodiment;
Fig. 4 is a schematic diagram of generating a TS in an embodiment;
Fig. 5 is a schematic diagram of H paths of TSs in an embodiment;
Fig. 6 is a schematic diagram of phase jump correction in an embodiment;
Fig. 7 is a schematic structural diagram of a phase jump correction device in an embodiment; and
Fig. 8 is a schematic diagram of a location where CS occurs in an embodiment.

### Detailed Description of the Embodiments

In an embodiment, the problem of accurately detecting and correcting phase jump may be solved in two aspects. In the first aspect, a phase jump location is accurately found, and accurate compensation and correction are performed. However, in a case where a carrier phase estimation module wants to keep up with the phase change, a large change in a phase estimation value is allowed, which is accompanied by a large jitter. However, the accurate judgment of phase jump requires a less jitter, which is contradictory, so the carrier phase estimation module is difficult to accurately detect the phase jump location. Meanwhile, because of the ultra-high rate of a coherent optical transmission system, the carrier phase estimation module processes data in parallel to reduce the processing speed requirement, thus causing the phase estimation module to have a delay. Moreover, a more complex carrier phase estimation module generates a larger delay, so accurate correction of phase jump is more difficult. In the second aspect, CS detection and subsequent Forward Error Correction (FEC) decoding are jointly processed. This method is very complex and difficult to implement in practical applications at this stage.

The related technology mainly aims to solve the phase jump problem when the carrier phase estimation module recovers the carrier. However, the target values of phase tracking and phase jump detection are opposite, and the solution of the phase tracking and phase jump detection is very costly. Therefore, the disclosure separates carrier phase estimation from phase jump detection, so that the carrier phase estimation module in the system may be made simpler without considering the influence of phase jump. Meanwhile, a phase jump detection and correction module refers to FEC decoding tolerance, and limits FEC entry data, that is, the number of hard decision continuous errors output by the phase jump detection and correction module to data below a required threshold, thereby making an error rate output by FEC meet the performance requirements.

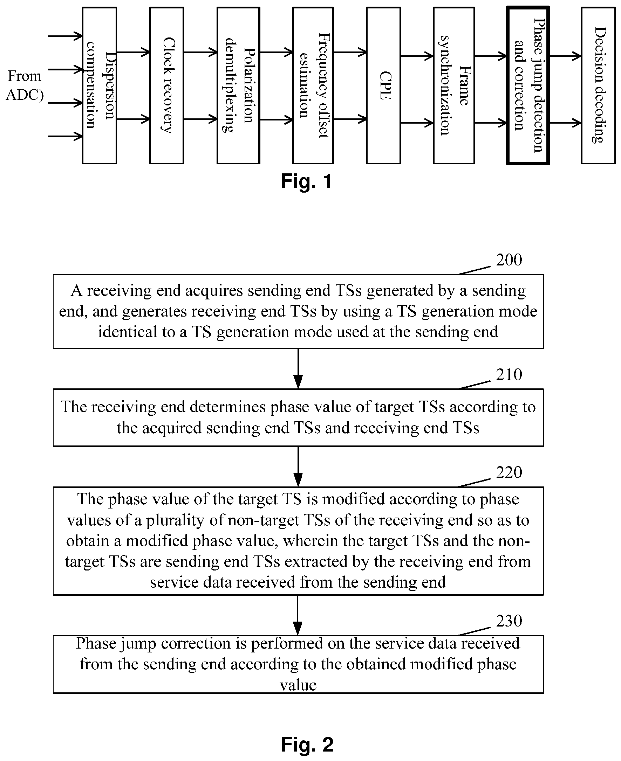

Fig. 1 is a block diagram of a related optical communication digital coherent receiver. Fig. 1 shows the location of an implementation manner of the disclosure in a system, such as phase jump detection and correction shown by a thick line frame in Fig. 1. Fig. 2 is a flowchart of a phase jump detection and correction method in the present embodiment. As shown in Fig. 2, the method includes the following steps:
In step 200, a receiving end acquires sending end TSs generated by a sending end, and generates receiving end TSs by using a TS generation mode identical to a TS generation mode used at the sending end.

In this step, the receiving end may acquire the sending end TSs generated by the sending end according to service data from the sending end.

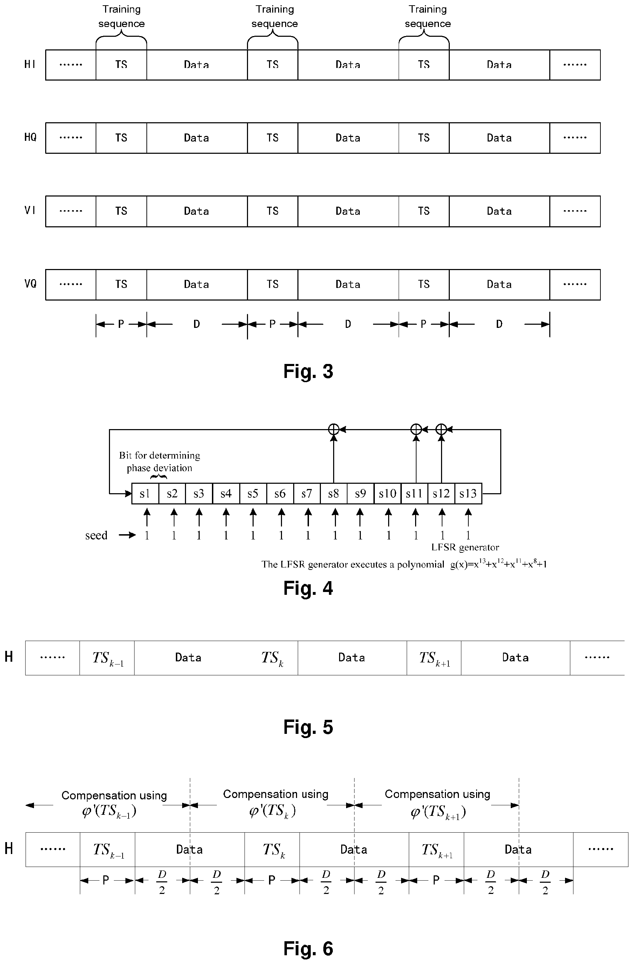

Fig. 3 is a schematic diagram of inserting a TS into service data in the present embodiment. As shown in Fig. 3, the length of the TS is P, and the length of Data between the TSs is D. Here, the length D of data between the TSs may be designed according to the requirement of FEC for the number of hard decision continuous errors of an entry. In a case where the number of continuous errors required by FEC at a particular bit error rate is not greater than NT, the length D of data between the TSs is D ≤ (NT/2-P).

The TS generation modes of the receiving end and the sending end are consistent.

Fig. 4 is an embodiment of generating a TS in the present embodiment. As shown in Fig. 4, the TS is generated by using a pseudo random number generator (PseudoRandom Binary Sequence (prbs) generator), such as a Linear Feedback Shifting Register (LFSR) generator. As shown in Fig. 4, in the present embodiment, the order of prbs is 13. The prbs generation process is shown in Fig. 4. Each frame reinitializes a prbs register, and a register value is initialized to be all "1".

A prbs sequence is deserialized to obtain a total of four TSs, namely HI, HQ, VI and VQ TSs of two polarization states of H and V. As shown in Fig. 3, the length of each TS may be P bit, and the length of Data between two adjacent TSs may be D bit. The allocation mode of deserializing is to allocate each bit at intervals sequentially, that is, allocate a first bit to a first location of a first TS of a data frame of HI, allocate a second bit to HQ, allocate a third bit to VI, and allocate a fourth bit to VQ. The process is sequentially performed until all TSs of one frame are completed. Taking an H path as an example, when data transmission is performed, H-path data is divided into HI-path data and HQ-path data. The HI path shown in Fig. 3 represents a real part of service data, a TS in the HI path represents a real part of the sending end TS, the HQ path represents an imaginary part of service data, and a TS in the HQ path represents an imaginary part of the sending end TS. When phase jump is corrected, the HI-path data and the HQ-path data are combined to obtain service data to be processed (such as the H-path data shown in Fig. 5 or Fig. 6). The service data includes a sending end TS obtained after the combination of the real part and the imaginary part of the sending end TS. The sending end TS is plural. Data in the service data is data actually needed to be transmitted to the receiving end. Each data in the Data of the service data is composed of the corresponding real part in HI-path Data and the corresponding imaginary part in HQ-path Data.

Fig. 4 is an embodiment of generating a TS, wherein the TS can be a random data.

In step 210, the receiving end determines phase value of target TSs according to the acquired sending end TSs and receiving end TSs.

The target TS is training data of the receiving end currently being processed, the sending end TS extracted by the receiving end from received service data from the sending end is also referred to as the training data of the receiving end, and the phase value of the target TS may be recorded as *ϕ*.

In an embodiment, conjugate multiplication is performed on the extracted sending end TS and the receiving end TS which is generated by the receiving end, and a vector operation is performed on an obtained product to obtain a decision vector z*ₐᵥₑ*. Extracting the sending end TS from the service data may be implemented by a related method of deciding the decision vector *zₐᵥₑ*, thereby obtaining the phase value *ϕ* of the training data of the receiving end.

It is assumed that the TS having a length of P, generated by the receiving end, is: x(n),x(n + 1), .... ,x(n + P - 1); the training data having a length of P, corresponding to the receiving end, that is, the sending TS extracted from the received service data from the sending end, is: y(n),y(n + 1), ....,y(n + P - 1); and an interval between the TSs is D.

In an embodiment, the operation of performing conjugate multiplication on the extracted sending end TS and the receiving end TS includes: $z \left(n\right) = x {\left(n\right)}^{∗} ∗ y \left(n\right) , n = 1,2 … P .$

In an embodiment, the step of performing a vector operation on a product obtained by conjugate multiplication to obtain a decision vector *zₐᵥₑ* includes:
an average value of P vectors is calculated to obtain a decision vector ${z}_{ave} = \frac{1}{P} {\sum }_{m = 0}^{P - 1} z \left(n+m\right)$, or,
an accumulated value of P vectors is calculated to obtain a decision vector ${z}_{ave} = {\sum }_{m = 0}^{P - 1} z \left(n+m\right)$, or,
low-pass filtering is performed on P vectors to obtain a decision vector *zₐᵥₑ*, wherein the decision vector ${z}_{ave} = {\sum }_{m = 0}^{P - 1} z \left(n+m\right) ⋅ h \left(m\right)$, h(m) in the decision vector ${z}_{ave} = {\sum }_{m = 0}^{P - 1} z \left(n+m\right) ⋅ h \left(m\right)$ is a filter coefficient, and the coefficient of a low-pass filter h(m) may be preset.

In an embodiment, the step of deciding the decision vector *zₐᵥₑ* to obtain a phase value *ϕ* of training data of the receiving end includes:
in a case where $\left|{z}_{ave}^{real}\right| \geq \left|{z}_{ave}^{imag}\right|$ and ${z}_{ave}^{real} \geq 0$, the phase of the training data TS of the receiving end is *ϕ* = 0;
in a case where $\left|{z}_{ave}^{real}\right| \geq \left|{z}_{ave}^{imag}\right|$ and ${z}_{ave}^{real} < 0$, the phase of the training data TS of the receiving end is *ϕ*=*π*;
in a case where $\left|{z}_{ave}^{real}\right| < \left|{z}_{ave}^{imag}\right|$ and ${z}_{ave}^{imag} \geq 0$, the phase of the training data TS of the receiving end is $φ = \frac{π}{2}$; and
in a case where $\left|{z}_{ave}^{real}\right| < \left|{z}_{ave}^{imag}\right|$ and ${z}_{ave}^{imag} < 0$, the phase of the training data TS of the receiving end is $φ = - \frac{π}{2}$,
wherein a real part of the decision vector *zₐᵥₑ* is ${z}_{ave}^{real}$, and an imaginary part of the decision vector *zₐᵥₑ* is ${z}_{ave}^{imag}$.

Or,
the step of calculating a phase angle *phₐᵥₑ* of the decision vector *zₐᵥₑ* and obtaining the phase value *ϕ* according to *phₐᵥₑ* includes:
   in a case where ${ph}_{ave} ∈ \left[-\frac{3}{4}π,-\frac{1}{4}π\right)$, the phase of the training data TS of the receiving end is $φ = - \frac{π}{2}$;
   in a case where ${ph}_{ave} ∈ \left[-\frac{1}{4}π,\frac{1}{4}π\right)$, the phase of the training data TS of the receiving end is *ϕ*=0;
   in a case where ${ph}_{ave} ∈ \left[\frac{1}{4}π,\frac{3}{4}π\right)$, the phase of the training data TS of the receiving end is $φ {=}^{\frac{π}{2}}$; and
   in a case where ${ph}_{ave} ∈ \left[\frac{3}{4}π,π\right) ∪ \left[-π,-\frac{3}{4}π\right)$, the phase of the training data TS of the receiving end is *ϕ*=*π*.

In step 220, the phase value of the target TS is modified according to phase values of a plurality of non-target TSs of the receiving end so as to obtain a modified phase value, wherein the target TSs and the non-target TSs are sending end TSs extracted by the receiving end from service data received from the sending end.

For example, a phase value *ϕ* of current training data (i.e., the target TS) of the receiving end may be modified according to preset phase values of a plurality of continuous training data (i.e., a plurality of non-target TSs) of the receiving end to obtain a modified phase value *ϕ*'.

As shown in Fig. 5, the H path is taken as an example, and the V path is the same. In the present embodiment, it is assumed that the phase value of *TSₖ* is modified according to a relationship among *TS*_{*k*-1}, *TSₖ* and *TSk*₊₁, that is, the phase value *ϕ* of the current training data *TSₖ* of the receiving end is modified according to the preset training data of the receiving end previous and subsequent to *TSₖ.* For the next TS, the operation of this step is repeated to cycle.

*ϕ*(*TSₖ*) represents a phase value of *TSₖ*, *ϕ'*(*TSₖ*) represents a modified phase value of *TSₖ*, *TS*_{*k*+1} is subsequent training data of the current training data of the receiving end, *ϕ*(TS_{*k*+1}) represents a phase value of *TS*_{*k*+1}, *ϕ*'(TS_{*k*+1}) represents a modified phase value of *TSk*₊₁, *TS*_{*k-*1} is previous training data of the current training data of the receiving end, *ϕ*(*TS*_{*k*-1}) represents a phase value of *TS*_{*k*-1}, and *ϕ'*(*TS*_{*k*-1}) represents a modified phase value of *TS*_{*k*-1}*.*

In an embodiment, when the following condition is satisfied, *TSₖ* is modified:
In a case where *ϕ*(*TSₖ*) ≠ *ϕ'*(*TS*_{*k*-1}) and *ϕ*(*TSₖ*) *≠ ϕ*(TS_{*k*+1}) and *ϕ'*(*TS*_{*k*-1}) *≠ ϕ*(TS_{*k*+1}), *ϕ*(*TSₖ*) is modified, *ϕ'*(*TSₖ*) = *ϕ*(*TS*_{*k*+1}) or *ϕ'*(*TSₖ*) = *ϕ'*(*TS*_{*k*-1}); when satisfying other conditions, *ϕ'*(*TSₖ*) = *ϕ*(*TSₖ*).

Or, *TS*_{*k*+1} is modified, vector accumulated values *zₐᵥₑ* of (N-2) TSs after *TSₖ* are accumulated to obtain *z*_{*ave_*2}, and phase decision as in step 210 is performed on *z*_{*ave_*2} to obtain *ϕ*(*TS*'_{*k*+1}).

When the following condition is satisfied, *TSₖ* is modified:
In a case where *ϕ*(*TSₖ*) *≠ ϕ'*(*TS*_{*k*-1}) and *ϕ*(*TSₖ*) *≠ ϕ*(*TS'*_{*k*+1}) and *ϕ'*(*TS*_{*k*-1}*)≠ϕ*(*TS'*_{*k*+1}), *ϕ*(*TSₖ*) is modified, *ϕ'*(*TSₖ*) = *ϕ*(*TS'*_{*k*+1}) or *ϕ'*(*TSₖ*) = *ϕ'*(*TS*_{*k*-1}); when satisfying other conditions, *ϕ'*(*TSₖ*) = *ϕ*(*TSₖ*).

Or, *TS*_{*k*+1} is modified, and low-pass filtering is performed on vector accumulated values *zₐᵥₑ* of (N-2) TSs after *TSₖ* to obtain *z*_{*ave_*2}, where the coefficient of a low-pass filter is configurable. Phase decision as in step 210 is performed on *z*_{*ave_*2} to obtain *ϕ*(*TS'*_{*k*+1})*.*

When the following condition is satisfied, *TSₖ* is modified:
In a case where *ϕ*(*TSₖ*) = *ϕ'*(*TS*_{*k*-1}) and *ϕ*(*TSₖ*) = *ϕ*(*TS'*_{*k*+1}) and *ϕ'*(*TS*_{*k*-1}) *≠ ϕ*(*TS'*_{*k*+1}), *ϕ*(*TSₖ*) is modified, *ϕ'*(*TSₖ*) = *ϕ*(*TS'*_{*k*+1}) or *ϕ'*(*TSₖ*) = *ϕ'*(*TS*_{*k*-1)}; when satisfying other conditions, *ϕ*'(*TSₖ*) = *ϕ*(*TSₖ*).

N represents the number of phase values of the continuous training data of the receiving end, that is, the number of the receiving end TSs, *TSₖ* is current training data of the receiving end, *ϕ*(*TSₖ*) represents a phase value of *TSₖ*, *ϕ'*(*TSₖ*) represents a modified phase value of *TSₖ*, *TS*_{*k*-1} is training data previous to the current training data of the receiving end, *ϕ*(*TS*_{*k*-1}) represents a phase value of *TS*_{*k*-1}, *ϕ*'(*TS*_{*k*-1}) represents a modified phase value of *TS*_{*k*-1}, *TS*_{*k*+1} is training data subsequent to the current training data of the receiving end, *ϕ*(*TS*_{*k*+1}) represents a phase value of *TS*_{*k*+1}, *ϕ'*(*TS*_{*k*+1}) represents a modified phase value of *TSk*₊₁, *TS'*_{*k*+1} is a modification value of *TSk*₊₁, and *ϕ*(*TS'*_{*k*+1}) represents a phase value of *TS*_{*k*+1}*.*

In step 230, phase jump correction is performed on the service data received from the sending end according to the obtained modified phase value.

Taking data between *TS*_{*k*-1} and *TSₖ* as an example, this step includes:
As shown in Fig. 6, (D+P) data centered on the training data is multiplied by cos(-*ϕ*') + *j*·sin(-*ϕ*') to remove the influence of phase jump. For example, (D+P) data centered on *TSₖ* is multiplied by *cos*(*-ϕ'*(*TSₖ*))+*j·sin*(*-ϕ'*(*TSₖ*)), and other data adopts the same manner.

In an embodiment, before step 230, the method may further include: a phase offset compensation value from the carrier phase estimation module in the optical communication digital coherent receiver is detected, locations where two sequential phase offset compensation values are changed drastically are discriminated, and a phase jump location is marked.

Assuming that the phase offset compensation value is expressed as phase(n), the method of detecting the phase offset compensation value includes:
a filter is constructed with a filter coefficient coef: [ones(1,N1) zeros(1,N2)-ones(1,N1)]/(2*N1)], wherein ones(1,N1) represents 1 row includes N1 1, zeros (1,N2) represents 1 row includes N2 0, and -ones (1,N1) represents 1 row includes N1 -1; the phase offset compensation value is filtered by the filter coefficient coef; and a filter value obtained after filtering is detected, in a case where an absolute value of the filter value exceeds a preset detection threshold Th_CS2, it indicates that the phase jump occurs, and a current location is recorded as CS_location. That is to say, the purpose of this filter is to detect a difference between the current N1 data phase average value and the first N1 data phase average value of the preceding (N1+N2) data according to the filter coefficient shown, and perform phase jump detection according to the difference, where N1 and N2 are preset integers greater than or equal to 1.

In an embodiment, the above detection method further includes: a guard window guard_win is preset; and in a case where an interval of the phase jump locations found at two adjacent times is smaller than the length of the guard window, phase jump is reported only once, and a first phase jump location is retained. That is to say, the guard window does not allow the occurrence of two phase jumps.

Correspondingly, when the phase jump detection and correction method in the present embodiment includes detection of the phase jump location, step 230 includes:
In a case where *ϕ'*(*TS*_{*k*-1}) = *ϕ'*(*TSₖ*), it indicates that no phase jump occurs between *TS*_{*k*-1} and *TSₖ*, data between *TS*_{*k*-1} and *TSₖ* (including *TS*_{*k*-1}, Data and *TSₖ*) is processed in the manner of Fig. 6, i.e., *TS*_{*k*-1} and first $\frac{D}{2}$ data in Data are multiplied by *cos*(*-ϕ'*(*TS*_{*k*-1}))+*j·sin*(*-ϕ'*(*TS*_{*k*-1})), and *TSₖ* and last $\frac{D}{2}$ data in Data are multiplied by cos(-*ϕ*'(*TSₖ*))+*j·*sin(*ϕ'*(*TSₖ*)) to remove the effect of phase jump. The compensation of data between *TSₖ* and *TS*_{*k*+1} (including *TSₖ*, Data and *TS*_{*k*+1}) adopts the same manner.

P is a length of the sending end TS, and D is a length of data between the TSs.

In a case where *ϕ'*(*TS*_{*k*-1}) *# ϕ'*(*TSₖ*), it indicates that phase jump has occurred between *TS*_{*k*-1} and *TSₖ* at this time, then:
In a case where the phase jump location is not detected, processing is performed in the manner of Fig. 6, that is, *TS*_{*k*-1}, and first $\frac{D}{2}$ data in Data are multiplied by cos(*-ϕ'*(*TS*_{*k*-1}))+*j·*sin(*-ϕ'*(*TS*_{*k*-1})), and *TSₖ* and last $\frac{D}{2}$ data in Data are multiplied by cos(*-ϕ'*(*TSₖ*))+*j*·sin(*-ϕ'*(*TSₖ*)) to remove the effect of phase jump. In a case where the phase jump location CS_location is detected, data before the phase jump location CS_location is compensated by using *ϕ'*(*TS*_{*k*-1}), and the phase jump location CS_location and data after the phase jump location CS_location are compensated by using *ϕ'*(*TSₖ*).

After the phase jump is corrected, it will enter the next detection and correction cycle, that is, the process returns to TS generation. That is to say, the phase jump detection and correction process of the disclosure is continuously repeated, that is, a data block is corrected and the next data block is corrected, and the phase jump is corrected in the process of data transmission.

The phase jump detection and correction method provided by the disclosure separates carrier phase estimation from phase jump detection, so that the carrier phase estimation module in the system may be made simpler without considering the influence of phase jump. The phase jump detection and correction method of the disclosure does not need to determine an exact location of phase jump, but limits the number of hard decision continuous errors of FEC entry data to be lower than a required threshold by simple phase comparison and adjustment, so that the FEC output data error rate meets the performance requirements. Moreover, the phase jump detection and correction method and the FEC module of the disclosure are independent of each other, and the FEC module does not need to consider phase jump detection and correction, and has low complexity and strong versatility.

The phase jump detection and correction method provided by the disclosure is simple to implement, is suitable for implementation in a high-rate environment, is not processed in combination with other modules, and has high versatility. The phase jump detection and correction method provided by the disclosure reduces the complexity of QPSK demodulation and a subsequent decision decoding module, and has high error resilience performance. Moreover, the phase jump of a TS is considered, thereby improving the robustness of the system.

The disclosure also provides a computer-readable storage medium, storing a computer-executable instruction for performing the phase jump detection and correction method according to any one of the descriptions of the disclosure.

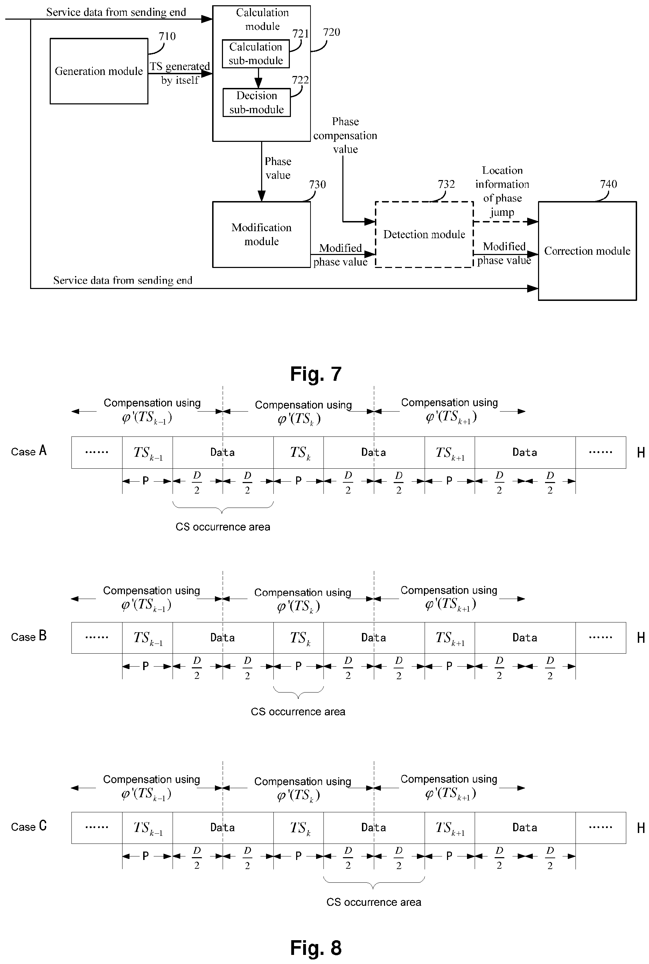

Fig. 7 is a schematic composition structure diagram of a phase jump detection and correction device in the present embodiment. The device may be arranged at a receiving end. As shown in Fig. 7, the device includes a generation module 710, a calculation module 720, a modification module 730, and a correction module 740.

The generation module 710 is configured to generate receiving end TSs by using a TS generation mode identical to a TS generation mode used to generate sending end TSs.

For a sending end, a TS is also generated in the same way as the receiving end, the TS is inserted into a data sequence (that is, service data sent by the sending end to the receiving end) at equal intervals, and the service data into which the TS generated by the sending end is inserted is sent to the receiving end.

The calculation module 720 is configured to acquire the sending end TSs generated by a sending end, and determine a phase value of a target according to the acquired sending end TSs and receiving end TSs.

In an embodiment, the calculation module 720 may include a calculation sub-module 721 and a decision sub-module 722.

The calculation sub-module 721 is configured to perform conjugate multiplication on the sending end TS (also referred to as training data of the receiving end) extracted from the service data received from the sending end and the receiving end TS generated by the receiving end, and perform a vector operation on an obtained product to obtain a decision vector *zₐᵥₑ*. Extracting the sending TS from the service data may be implemented by a related method.

The decision sub-module 722 is configured to decide the decision vector *zₐᵥₑ* to obtain the phase value of the target TS.

The modification module 730 is configured to modify, according to phase values of a plurality of non-target TSs, the phase value of the target TSs so as to obtain a modified phase value, the target TSs and the non-target TSs are sending end TSs extracted from service data received from the sending end.

For example, the modification module 730 may modify a phase value *ϕ* of a current training data (i.e., the target TS) of the receiving end according to preset phase values of a plurality of continuous training data (i.e., a plurality of non-target TSs) of the receiving end to obtain a modified phase value *ϕ*'.

The correction module 740 is configured to perform, according to the obtained modified phase value, phase jump correction on the service data received from the sending end.

For example, phase jump correction is performed on the received service data from the sending end according to the obtained modified phase value *ϕ*'.

In an embodiment, the phase jump detection and correction device further includes a detection module 732.

The detection module 732 is configured to filter, before performing phase jump correction on the received service data from the sending end, a phase offset compensation value, and determine a phase jump location of the service data based on a filter result and a preset detection threshold.

For example, the detection module 732 detects a phase offset compensation value from a carrier phase estimation module in an optical communication digital coherent receiver, and marks a phase jump location.

Description will be made in conjunction with the following embodiments.

### First embodiment

A TS is generated. As shown in Fig. 4, the TS may be generated by using, for example, an LFSR generator. In the present embodiment, the order of prbs is 13. The prbs generation process is shown in Fig. 4. Each frame reinitializes a prbs register, and a register value is initialized to be all "1".

A prbs sequence is deserialized to obtain a total of four TSs, namely HI, HQ, VI and VQ of two polarization states of H and V. The length of each TS is P bit. The allocation mode of deserializing is to allocate each bit at intervals sequentially, that is, allocate a first bit to a first location of a first TS of a data frame of HI, allocate a second bit to HQ, allocate a third bit to VI, and allocate a fourth bit to VQ. The process is sequentially performed until all TSs of one frame are completed.

Fig. 4 is an embodiment of generating a TS. In principle, the TS is random data.

Vector calculation is performed. In the vector calculation, conjugate multiplication is performed on training data of the receiving end and a TS generated by the receiving end, and a vector operation is performed on a product to obtain a decision vector *zₐᵥₑ*.

It is assumed that the TS having a length of P, generated by the receiving end, is: x(n),x(n + 1),....,x(n + P - 1) the training data having a length of P, corresponding to the receiving end, that is, the sending TS extracted from the received service data from the sending end, is: y(n),y(n + 1), ....,y(n + P - 1); and an interval between the TSs is D.

The calculation process is as follows.

A product vector of conjugate multiplication of training data having a length of P, received by the receiving end, and a TS having a length of P, generated by the receiving end prbs is calculated, that is, z(n) = x(n)* * y(n), n = 1,2 ... P.

An average value of P vectors is calculated to obtain a decision vector ${z}_{ave} = \frac{1}{P} {\sum }_{m = 0}^{P - 1} z \left(n+m\right)$*.*

The decision vector *zₐᵥₑ* is decided to obtain the phase value *ϕ* of the training data of the receiving end. It is assumed that a real part of *zₐᵥₑ* is ${z}_{ave}^{real}$, an imaginary part of *z*ₐᵥₑ is ${z}_{ave}^{imag}$, and the phase value *ϕ* of the training data TS of the receiving end is obtained according to the following judgment.

In a case where $\left|{z}_{ave}^{real}\right| \geq \left|{z}_{ave}^{imag}\right|$ and ${z}_{ave}^{real} \geq 0$, the phase of the training data TS of the receiving end is *ϕ* = 0.

In a case where $\left|{z}_{ave}^{real}\right| \geq \left|{z}_{ave}^{imag}\right|$ and ${z}_{ave}^{real} < 0$, the phase of the training data TS of the receiving end is *ϕ*=*π*.

In a case where $\left|{z}_{ave}^{real}\right| < \left|{z}_{ave}^{imag}\right|$ and ${z}_{ave}^{imag} \geq 0$, the phase of the training data TS of the receiving end is $φ = \frac{π}{2}$.

In a case where $\left|{z}_{ave}^{real}\right| < \left|{z}_{ave}^{imag}\right|$ and ${z}_{ave}^{imag} < 0$, the phase of the training data TS of the receiving end is $φ = - \frac{π}{2}$.

Then, the obtained phase value is modified. The phase value *ϕ* of current training data of the receiving end is modified to obtain *ϕ'* according to phase values of a plurality of sequentially continuous training data.

The H path is taken as an example, and the V path is the same. In the present embodiment, it is assumed that the phase value of *TSₖ* is modified according to a relationship among *TS*_{*k*-1}, *TSₖ* and *TS*_{*k*+1}, that is, the phase value *ϕ* of the current training data *TSₖ* of the receiving end is modified according to the preset training data previous and subsequent to *TSₖ*. For the next TS, the operation of this step is repeated to cycle.

*ϕ*(*TSₖ*) represents a phase value of *TSₖ*, and *ϕ'*(*TSₖ*) represents a modified phase value of *TSₖ. TS*_{*k*-1} and *TS*_{*k*+1} are the same.

When the following condition is satisfied, *TSₖ* is modified:
In a case where *ϕ*(*TSₖ*) = *ϕ'*(*TS*_{*k*-1}) and *ϕ*(*TSₖ*) ≠ *ϕ*(*TS*_{*k*+1}) and *ϕ'*(*TS*_{*k*-1}) ≠ *ϕ*(*TS*_{*k*+1}), *ϕ*(*TSₖ*) is modified, *ϕ'*(*TSₖ*) = *ϕ*(*TS*_{*k*+1}) or *ϕ'*(*TSₖ*) = *ϕ'*(*TS*_{*k*-1}).

When satisfying other conditions, *ϕ*'(*TSₖ*) = *ϕ*(*TSₖ*).

In the present embodiment, a phase offset compensation value from the carrier phase estimation module is detected, locations where two sequential phase offset compensation values are changed drastically are discriminated, and a location where phase jump is regarded to occur is marked. In a case where the phase offset compensation value is expressed as phase(n), the detection method is as follows.

A filter is constructed with a filter coefficient coef: [ones(1,N1) zeros(1,N2)-ones(1,N1)]/(2*N1)]; the phase offset compensation value is filtered by the filter coefficient coef; and a filter value obtained after filtering is detected, in a case where an absolute value of the filter value exceeds a preset detection threshold Th_CS2, it indicates that the phase jump occurs, and a current location is recorded as CS_location.

A guard window guard_win is preset; and in a case where an interval of the phase jump locations found at two adjacent times is smaller than the length of the guard window, phase jump is reported only once, and a first phase jump location is retained. That is to say, the guard window does not allow the occurrence of two phase jumps.

In an embodiment, whether the phase jump location is detected may be controlled by an enable switch CS_location_en. For example, CS_location_en=1 indicates that the phase jump location detection starts, and CS_location_en=0 indicates that the phase jump location detection stops.

Phase jump correction is performed. The service data of the sending end received by the receiving end is processed according to the modified phase value *ϕ'*, data between *TS*_{*k*-1} and *TSₖ* is taken as an example for description, and other data is deduced by analogy. It may be processed in three cases.

The first case: CS_location_en=0 indicates that the phase jump location detection stops. At this time, the compensation mode is shown in Fig. 6, and (D+P) data centered on the training data is multiplied by cos(-*ϕ*')+*j*·sin(-*ϕ*') to remove the influence of phase jump. For example, (D+P) data centered on *TSₖ* is multiplied by cos(*-ϕ'*(*TSₖ*))+*j*·sin(-*ϕ*'(*TSₖ*)), and other data adopts the same manner.

The second case: CS_location_en=1 and *ϕ'*(*TS*_{*k*-1}) = *ϕ'*(*TSₖ*) indicates that no phase jump occurs between *TS*_{*k*-1} and *TSₖ* at this time. Data between *TS*_{*k*-1}, and *TSₖ* (including *TS*_{*k*-1}, Data and *TSₖ*) is processed in the manner of Fig. 6.

The third case: CS_location_en=1 and *ϕ'*(*TS*_{*k*-1}) ≠ *ϕ'*(*TSₖ*) indicates that phase jump occurs between *TS*_{*k*-1} and *TSₖ* at this time. At this time, there are two cases.

When the phase jump location is not detected, processing is performed in the manner of Fig. 6. When the phase jump location CS_location is detected, data before CS_location is compensated by *ϕ'*(*TS*_{*k*-1}), and data at CS_location and after CS_location is compensated by *ϕ'*(*TSₖ*).

### Second embodiment

A TS is generated in the process consistent with the generating process in the first embodiment.

Vector calculation is performed. In the vector calculation, conjugate multiplication is performed on training data of the receiving end and a TS generated by the receiving end, and a vector operation is performed on a product to obtain a decision vector *zₐᵥₑ*.

It is assumed that the TS having a length of P, generated by the receiving end, is: x(n),x(n + 1),....x(n + P - 1); the training data having a length of P, corresponding to the receiving end, that is, the sending TS extracted from the received service data from the sending end, is: y(n),y(n + 1), ....,y(n + P - 1); and an interval between the TSs is D.

A product vector of conjugate multiplication of training data having a length of P, received by the receiving end, and a sequence having a length of P, generated by the receiving end prbs is calculated, that is, z(n) = x(n)* * y(n), n = 1,2 ... P.

An accumulated value of P vectors is calculated to obtain a decision vector ${z}_{ave} = {\sum }_{m = 0}^{P - 1} z \left(n+m\right)$.

The process of deciding the decision vector *zₐᵥₑ* to obtain a phase value *ϕ* of training data of the receiving end is consistent with the process in the first embodiment.

Then, the obtained phase value is modified. The phase value *ϕ* of current training data of the receiving end is modified to obtain *ϕ*' according to phase values of a plurality of sequentially continuous training data.

As shown in Fig. 5, the H path is taken as an example, and the V path is the same. In the present embodiment, it is assumed that the phase value of *TSₖ* is modified according to a relationship among *TS*_{*k*-1}, *TSₖ* and *TS*_{*k*+1}, that is, the phase value *ϕ* of the current training data *TSₖ* of the receiving end is modified according to the preset training data previous and subsequent to *TSₖ.* For the next TS, the operation of this step is repeated to cycle.

*ϕ*(*TSₖ*) represents a phase value of *TSₖ* obtained by phase decision calculation, and *ϕ*'(*TSₖ*) represents a modified phase value of *TSₖ. TS*_{*k*-1}, and *TS*_{*k*+1} are the same.

*TS*_{*k*+1} is modified, vector accumulated values *zₐᵥₑ* of (N-2) TSs after *TSₖ* are accumulated to obtain *z*_{*ave_*2}, and phase decision as in step 210 is performed on *z*_{*ave_*2} to obtain *ϕ*(*TS*'_{*k*+1}).

When the following condition is satisfied, *TSₖ* is modified:
In a case where *ϕ*(*TSₖ*) ≠ *ϕ'*(*TS*_{*k*-1}) and *ϕ*(*TSₖ*) ≠ *ϕ*(*TS'*_{*k*+1}) and *ϕ'*(*TS*_{*k*-1})≠*ϕ*(*TS'*_{*k*+1}), *ϕ(TSₖ)* is modified, *ϕ'*(*TSₖ*) = *ϕ*(*TS'*_{*k*+1}) or *ϕ'*(*TSₖ*) = *ϕ'*(*TS*_{*k*-1)}.

When satisfying other conditions, *ϕ'*(*TSₖ*) = *ϕ*(*TSₖ*).

In the present embodiment, a phase offset compensation value from the carrier phase estimation module is detected, locations where two sequential phase offset compensation values are changed drastically are discriminated, and a location where phase jump occurs is marked. In a case where the phase offset compensation value is expressed as phase(n), the method of detecting the phase jump location is consistent with the method in the first embodiment.

Phase jump correction is performed. The implementation of the process is consistent with the implementation of the process in the first embodiment.

### Third embodiment

A TS is generated. The implementation of the process is consistent with the implementation of the process in the first embodiment.

Vector calculation is performed. In the vector calculation, conjugate multiplication is performed on training data of the receiving end and a TS generated by the receiving end, and a vector operation is performed on a product to obtain a decision vector *zₐᵥₑ*.

It is assumed that the TS having a length of P, generated by the receiving end, is: x(n),x(n + 1),....,x(n + P - 1); the training data having a length of P, corresponding to the receiving end, that is, the sending TS extracted from the received service data from the sending end, is: y(n),y(n + 1), ....,y(n + P - 1); and an interval between the TSs is D.

A product vector of conjugate multiplication of training data having a length of P, received by the receiving end, and a sequence having a length of P, generated by the receiving end prbs is calculated, that is, z(n) = x(n)* * y(n), n = 1,2 ... P.

Low-pass filtering is performed on P vectors to obtain a decision vector ${z}_{ave} = {\sum }_{m = 0}^{P - 1} z \left(n+m\right) ⋅ h \left(m\right)$, wherein h is a filter coefficient, and the coefficient of a low-pass filter may be preset.

The decision vector *zₐᵥₑ* is decided to obtain a phase value *ϕ* of training data of the receiving end.

The step of calculating a phase angle *phₐᵥₑ* of the decision vector *zₐᵥₑ* and obtaining the phase value *ϕ* according to *phₐᵥₑ* includes:
In a case where ${ph}_{ave} ∈ \left[-\frac{3}{4}π-\frac{1}{4}π\right)$, the phase of the training data TS of the receiving end is $φ = - \frac{π}{2}$;

In a case where ${ph}_{ave} ∈ \left[-\frac{1}{4}π\frac{1}{4}π\right)$, the phase of the training data TS of the receiving end is *ϕ*=0;

In a case where ${ph}_{ave} ∈ \left[\frac{1}{4}π\frac{3}{4}π\right)$, the phase of the training data TS of the receiving end is $φ = \frac{π}{2}$;

In a case where ${ph}_{ave} ∈ \left[\frac{3}{4}ππ\right) ∪ \left[-π-\frac{3}{4}π\right)$, the phase of the training data TS of the receiving end is *ϕ*=*π*.

Then, the obtained phase value is modified. The implementation of the process is consistent with the implementation of the process in the first embodiment.

In the present embodiment, a phase offset compensation value from the carrier phase estimation module is detected, locations where two sequential phase offset compensation values are changed drastically are discriminated, and a location where phase jump occurs is marked. In a case where the phase offset compensation value is expressed as phase(n), the implementation of the phase jump detection method is consistent with the method in the first embodiment.

Phase jump correction is performed. The implementation of the process is consistent with the implementation of the process in the first embodiment.

### Fourth embodiment

A TS is generated. The implementation of the process is consistent with the implementation of the process in the first embodiment.

Vector calculation is performed. The implementation of the process is consistent with the implementation of the process in the second embodiment.

The decision vector *zₐᵥₑ* is decided. The implementation of the process is consistent with the implementation of the process in the third embodiment.

Then, the obtained phase is modified. The phase value *ϕ* of current training data of the receiving end is modified to obtain *ϕ*' according to phase values of a plurality of sequentially continuous training data.

As shown in Fig. 5, the H path is taken as an example, and the V path is the same. In the present embodiment, it is assumed that the phase value of *TSₖ* is modified according to a relationship among *TS*ₖ₋₁, *TSₖ* and *TS*_{*k*-1} that is, the phase value *ϕ* of the current training data *TSₖ* of the receiving end is modified according to the preset training data previous and subsequent to *TSₖ.* For the next TS, the operation of this step is repeated to cycle.

*ϕ*(*TSₖ*) represents a phase value of *TSₖ*, and *ϕ'*(*TSₖ*) represents a modified phase value of *TSₖ. TS*_{*k*-1} and *TS*_{*k*+1} are the same.

*TS*_{*k*+1} is modified, and low-pass filtering is performed on vector accumulated values *zₐᵥₑ* of (N-2) TSs after *TSₖ* to obtain *z*_{*ave_*2}, wherein the coefficient of a low-pass filter is configurable. Phase decision as in step 210 is performed on *z*_{*ave_*2} to obtain *ϕ*(*TS'*'_{*k*+1}).

When the following condition is satisfied, *TSₖ* is modified:
In a case where *ϕ*(*TSₖ*)≠*ϕ'*(*TS*_{*k*-1}) and *ϕ*(*TSₖ*) ≠ *ϕ*(*TS'*_{*k*+1}) and *ϕ'*(*TS*_{*k*-1}) ≠ *ϕ*(*TS'*_{*k*+1}), *ϕ*(*TSₖ*) is modified, *ϕ'*(*TSₖ*) = *ϕ*(*TS'*_{*k*+1}*)* or *ϕ'*(*TSₖ*) = *ϕ'*(*TS*_{*k*-1}).

When satisfying other conditions, *ϕ'*(*TSₖ*) = *ϕ*(*TSₖ*).

In the present embodiment, a phase offset compensation value from the carrier phase estimation module is detected, locations where two sequential phase offset compensation values are changed drastically are discriminated, and a location where phase jump occurs is marked. In a case where the phase offset compensation value is expressed as phase(n), the implementation of the phase jump detection method is consistent with that of the first embodiment.

Phase jump correction is performed. The implementation of the process is consistent with the implementation of the process in the first embodiment.

The above embodiments may be combined.

The following describes the process of controlling, by the phase correction and compensation method of the disclosure, an error caused by phase jump within a controllable range with an example. The implementation of the phase jump detection and correction method of the disclosure is based on two basic conditions: one is that the phase value obtained by phase decision calculation is sufficiently accurate only when no CS noise occurs. This condition may be satisfied by adjusting the length P of the TS according to the demand. For example, when P=8, the phase value error probability obtained by phase decision calculation may be kept at less than10⁻¹⁹. The other one is that a CS occurrence interval is not less than one decoding frame length, that is, at most one CS occurs in one decoding frame.

CS_location_en=0, that is, the case of stopping phase jump location detection is taken as an example.

There are two cases of phase correction errors: CS miss judgment and CS misjudgment. The CS miss judgment is that CS has occurred, but a compensation error is caused due to not finding in phase correction. The CS misjudgment is that CS does not occur, but the CS is judged to occur in phase correction, or the true CS size is inconsistent with the CS size judged in phase correction, thereby causing the compensation error. The results of the CS miss judgment and the CS misjudgment are consistent, so the two cases are combined into a CS judgment error subsequently.

There are three cases for a location where CS occurs, as shown in Fig. 8.

For case A, there are three cases, that is, CS occurs to the left of the central axis of Data, CS occurs at the center axis of Data, and CS occurs to the right of the center axis of Data. Since CS has already occurred in a Data area in case A, *ϕ'*(*TS*_{*k*-1}), *ϕ*(*TSₖ*); *ϕ*(*TS*_{*k*+1}) (or *ϕ*(*TS'*_{*k*+1})) are accurate at this time according to the above two basic conditions. Then, the worst case of the three cases is that CS occurs at the beginning or end of Data, which will cause D/2 continuous symbol errors. Since HI and HV are decoded separately, it will cause (*D*/2)×2= *D* continuous errors. At this time, *ϕ'*(*TS*_{*k*-1}), *ϕ'*(*TS*_{*k*-1}), *ϕ*(*TS*_{*k*+1}) (or *ϕ*(*TS'*_{*k*+1})) are accurate, so the phase jump detection and correction method of the disclosure has no effect on this situation.

For case B, CS occurs on a TS. At this time, *ϕ*'(*TSₖ*) may be correct or wrong, and it is assumed here that *ϕ*(*TSₖ*) is wrong. Since CS has already occurred in *TSₖ* in case B, *ϕ'*(*TS*_{*k*-1)}, *ϕ*(*TS*_{*k*+1}) (or *ϕ*(*TS'*_{*k*+1})) are accurate at this time according to the above two basic conditions. Then, this case will result in D continuous symbol errors. Since HI and HV are decoded separately, 2D continuous errors will be caused. In a case where the phase jump detection and correction method of the disclosure is used, the maximum continuous error number may be reduced to D. For example, when *ϕ*'(*TSₖ*) = *ϕ*(*TS*_{*k*+1}) (or *ϕ'*(*TSₖ*) = *ϕ*(*TS'*_{*k*+1})) is used for modification, *TSₖ* left compensation is wrong, and *TSₖ* right compensation is correct. When *ϕ'*(*TSₖ*) = *ϕ'*(*TS*_{*k*-1}) is used for modification, *TSₖ* left compensation is correct, and *TSₖ* right compensation is wrong.

For case C, it is symmetrical with case A, so the result is the same as case A.

Meanwhile, since the H path and the V path are independent of each other, and case C and case A are the same, the H and V paths are combined with case A and case B, so that the maximum continuous error number case of one frame sent to a decoder is shown in Table 1.

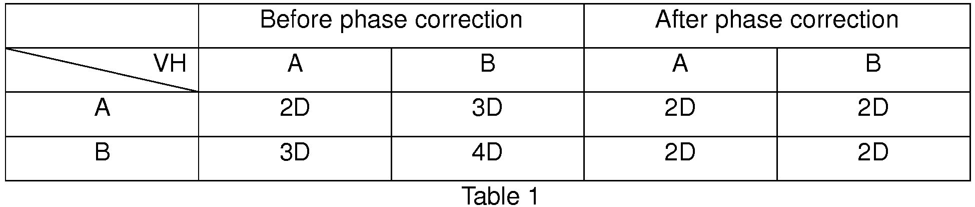

When designing a frame structure, in a case where the number of continuous errors required by FEC at a particular bit error rate is not greater than NT, the length D of data between the TSs is D≤(NT/2-P). Therefore, 2D < NT, the number of continuous errors after phase correction is less than the FEC requirement, so the phase jump detection and correction method of the disclosure can meet the system requirements.

The case of CS_location_en=1 is to combine the result of phase jump location detection on the basis of CS_location_en=0, so that the number of continuous errors may be made smaller.

### Industrial Applicability

The phase jump correction method and device provided by the disclosure can easily and effectively find phase jump and achieve phase correction.

## Claims

1. A phase jump correction method, comprising:
acquiring, by a receiving end, sending end Training Sequences (TSs) generated by a sending end, and generating receiving end TSs by using a TS generation mode identical to a TS generation mode used at the sending end;
determining phase value of target TSs according to the acquired sending end TSs and the generated receiving end TSs;
modifying, according to phase values of a plurality of non-target TSs of the receiving end, the phase value of the target TSs to obtain a modified phase value, wherein the target TSs and the non-target TSs are sending end TSs extracted by the receiving end from service data received from the sending end; and
performing, according to the obtained modified phase value, phase jump correction on the service data received from the sending end.

2. The method according to claim 1, wherein before performing phase jump correction on the service data received from the sending end, the method further comprises: filtering a phase offset compensation value, and determining a phase jump location of the service data based on a filter result and a preset detection threshold.

3. The method according to claim 1 or 2, wherein determining the phase value of the target TSs according to the acquired sending end TSs and the generated receiving end TSs comprises:
performing, by the receiving end, conjugate multiplication on the sending end TSs and the receiving end TSs, and performing a vector operation on an obtained product to obtain a decision vector *zₐᵥₑ*; and
deciding the decision vector *zₐᵥₑ* to obtain the phase value of the target TSs.

4. The method according to claim 3, wherein performing the vector operation on the obtained product to obtain the decision vector *zₐᵥₑ* comprises:
calculating an average value of P vectors to obtain a decision vector ${z}_{ave} = \frac{1}{P} {\sum }_{m = 0}^{P - 1} z \left(n+m\right)$, or,
calculating an accumulated value of P vectors to obtain a decision vector ${z}_{ave} = {\sum }_{m = 0}^{P - 1} z \left(n+m\right)$, or,
performing low-pass filtering on P vectors to obtain the decision vector *zₐᵥₑ*, wherein the decision vector ${z}_{ave} = {\sum }_{m = 0}^{P - 1} z \left(n+m\right) ⋅ h \left(m\right)$, h(m) in the decision vector ${z}_{ave} = {\sum }_{m = 0}^{P - 1} z \left(n+m\right) ⋅ h \left(m\right)$ being a filter coefficient,
wherein P is a length of a sending end TS;
z(n) = x(n)* * y(n), n = 1,2 ... P, wherein z(n) is a product obtained by conjugate multiplication of the sending end TS and a receiving end TS;
x(n),x(n + 1),.... ,x(n + P - 1) is the receiving end TS; and
y(n),y(n + 1),....,y(n+ P-1) is the sending end TS.

5. The method according to claim 3, wherein deciding the decision vector *zₐᵥₑ* to obtain a phase value of training data of the receiving end comprises:
in a case where $\left|{z}_{ave}^{real}\right| \geq \left|{z}_{ave}^{imag}\right|$ and ${z}_{ave}^{real} \geq 0$, the phase of the training data of the receiving end is *ϕ* = 0;
in a case where $\left|{z}_{ave}^{real}\right| \geq \left|{z}_{ave}^{imag}\right|$ and ${z}_{ave}^{real} < 0$, the phase of the training data of the receiving end is *ϕ*=*π*;
in a case where $\left|{z}_{ave}^{real}\right| < \left|{z}_{ave}^{imag}\right|$ and ${z}_{ave}^{imag} \geq 0$, the phase of the training data of the receiving end is $φ = \frac{π}{2}$; and
in a case where $\left|{z}_{ave}^{real}\right| < \left|{z}_{ave}^{imag}\right|$ and ${z}_{ave}^{imag} < 0$, the phase of the training data of the receiving end is $φ = - \frac{π}{2}$,
wherein a real part of the decision vector *zₐᵥₑ* is ${z}_{ave}^{real}$, and an imaginary part of the decision vector *zₐᵥₑ* is ${z}_{ave}^{imag}$.

6. The method according to claim 3, wherein deciding the decision vector *zₐᵥₑ* to obtain a phase value of training data of the receiving end comprises:
calculating a phase angle *phₐᵥₑ* of the decision vector *zₐᵥₑ*, and obtaining the phase value *ϕ* according to the phase angle *phₐᵥₑ*;
in a case where ${ph}_{ave} ∈ \left[-\frac{3}{4}π,-\frac{1}{4}π\right)$, the phase of the training data of the receiving end is $φ = - \frac{π}{2}$;
in a case where ${ph}_{ave} ∈ \left[-\frac{1}{4}π,\frac{1}{4}π\right)$, the phase of the training data of the receiving end is *ϕ*=0;
in a case where ${ph}_{ave} ∈ \left[\frac{1}{4}π,\frac{3}{4}π\right)$, the phase of the training data of the receiving end is $φ = \frac{π}{2}$; and
in a case where ${ph}_{ave} ∈ \left[\frac{3}{4}π,π\right) ∪ \left[-π,-\frac{3}{4}π\right)$, the phase of the training data of the receiving end is *ϕ*=*π*.

7. The method according to claim 1 or 2, wherein modifying the phase value of the target TSs to obtain the modified phase value comprises:
modifying a phase value of *TSₖ* when satisfying a modification condition, wherein the modification condition being:
in a case where *ϕ*(*TSₖ*) *≠ ϕ'*(TS_{*k*-1}) and *ϕ*(*TSₖ*) *≠ ϕ*(TS_{*k*+1}) and *ϕ*(*TSₖ₋₁*) *≠ ϕ*(TS_{*k*+1}), modifying *ϕ*(*TSₖ*), wherein *ϕ'*(*TSₖ*) = *ϕ(TS*_{*k*+1}) or *ϕ'*(*TSₖ*) = *ϕ'*(*TSₖ₋₁*),
wherein *TSₖ* is a target TS, *ϕ*(*TSₖ*) represents a phase value of *TSₖ*, *ϕ'*(*TSₖ*) represents a modified phase value of *TSₖ*, *TS*_{*k*-1} is a previous TS of the target TS, *ϕ*(*TS*_{*k*-1}) represents a phase value of *TS*_{*k*-1}, *ϕ*(*TS*_{*k*-1}) represents a modified phase value of *TS*_{*k*-1}, *TS*_{*k*+1} is a subsequent TS of the target TS, *ϕ*(TS_{*k*+1}) represents a phase value of *TSk*₊₁, and *ϕ'*(*TS*_{*k*+1}) represents a modified phase value of *TS*_{*k*+1}*.*

8. The method according to claim 1 or 2, wherein modifying the phase value of the target TSs to obtain the modified phase value comprises:
modifying *TS*_{*k*+1}, accumulating vector accumulated values *zₐᵥₑ* of (N-2) TSs after *TSₖ* to obtain *z*_{*ave*_2}, and performing phase decision on *z*_{*ave*_2} to obtain *ϕ*(*TS'*_{*k*+1}); and
modifying a phase value of *TSₖ* when satisfying a modification condition, wherein the modification condition being:
in a case where *ϕ*(*TSₖ*) ≠ *ϕ'*(*TS*_{*k*-1}*)* and *ϕ*(*TSₖ*) ≠ *ϕ*(*TS'*_{*k*+1}) and *ϕ'*(*TS*_{*k*-1}) ≠ *ϕ*(*TS'*_{*k*+1}), modifying *ϕ*(*TSₖ*)*,* wherein *ϕ'*(*TSₖ*) = *ϕ*(*TS*'_{*k*+1}) or *ϕ'*(*TSₖ*)=*ϕ'*(*TS*_{*k*-1}),
wherein N represents the number of the receiving end TSs, *TSₖ* is the target TS, *ϕ*(*TSₖ*) represents a phase value of *TSₖ*, *ϕ'*(*TSₖ*) represents a modified phase value of *TSₖ*, *TS*_{*k*-1}, is a previous TS of the target TS, *ϕ*(TS_{*k*-1}) represents a phase value of *TS*_{*k*-1}, *ϕ'*(*TS*_{*k*-1}) represents a modified phase value of *TS*_{*k*-1}, *TS*_{*k*+1} is a subsequent TS of the target TS, *ϕ*(*TS*_{*k*+1}) represents a phase value of *TS*_{*k*+1}, *TS'*_{*k*+1} is a modification value of *TSk*₊₁, and *ϕ*(*TS'*_{*k*+1}) represents a phase value of *TS*_{*k*+1}*.*

9. The method according to claim 1 or 2, wherein modifying the phase value of the target TSs to obtain the modified phase value comprises:
modifying *TS*_{*k*+1}, performing low-pass filtering on vector accumulated values *zₐᵥₑ* of (N-2) TSs after *TSₖ* to obtain *z*_{*ave*_2}, and performing phase decision on *z*_{*ave_*2} to obtain *ϕ*(*TS''*_{*k*+1}); and
modifying a phase value of *TSₖ* when satisfying a modification condition, the modification condition being:
in a case where *ϕ*(*TSₖ*) *≠ ϕ'*(*TS*_{*k*-1}) and *ϕ*(*TSₖ*) *≠ ϕ*(*TS'*_{*k*+1}) and *ϕ'*(*TS*_{*k*-1})≠*ϕ(TS*'_{*k*+1}), modifying *ϕ*(*TSₖ*), wherein *ϕ'*(*TSₖ*) = *ϕ(TS*_{*k*+1}) or *ϕ'*(*TSₖ*) = *ϕ'*(*TS*_{*k*-1})
under other conditions, *ϕ*'(*TSₖ*) = *ϕ*(*TSₖ*),
wherein N represents the number of the receiving end TSs, *TSₖ* is the target TS, *ϕ*(*TSₖ*) represents a phase value of *TSₖ*, *ϕ'*(*TSₖ*) represents a modified phase value of *TSₖ*, *TS*_{*k*-1}, is a previous TS of the target TS, *ϕ*(*TS*_{*k*-1}) represents a phase value of *TS*_{*k*-1}, *ϕ*'(*TS*_{*k*-1}) represents a modified phase value of *TS*_{*k*-1}, *TS*_{*k*+1} is a subsequent TS of the target TS, *ϕ*(*TS*_{*k*+1}) represents a phase value of *TS*_{*k*+1}, *TS'*_{*k*+1} is a modification value of *TS*_{*k*+1}, and *ϕ(TS*'_{*k*+1}) represents a phase value of *TS*_{*k*+1}.

10. The method according to claim 1 or 2, wherein performing, according to the obtained modified phase value, phase jump correction on the service data received from the sending end comprises:
multiplying (D+P) data centered on the target TS by cos(-*ϕ*') + *j ·*sin(-*ϕ*'),
wherein P is the length of the sending end TS, D is the length of data between two adjacent sending ends TSs, *ϕ'* is the modified phase value, and j is an imaginary unit.

11. The method according to claim 2, wherein filtering the phase offset compensation value and determining the phase jump location of the service data based on the filter result and the preset detection threshold comprises:
constructing a filter with filter coefficients: [ones(1,N1) zeros(1,N2)-ones(1,N1)]/(2*N1)],wherein ones(1,N1) represents 1 row including N1 1, zeros (1,N2) represents 1 row including N2 0, -ones (1,N1) represents 1 row including N1 -1, and N1 and N2 are preset integers greater than or equal to 1;
filtering the phase offset compensation value by using the filter coefficient; and
detecting a filter value obtained after filtering, and in a case where an absolute value of the filter value exceeds a preset detection threshold, recording the location of service data corresponding to the filter value as a phase jump location.

12. The method according to claim 11, wherein before detecting the phase offset compensation value, the method further comprises:
presetting a guard window; and
in a case where an interval of the phase jump locations found at two adjacent times is smaller than the length of the guard window, determining the phase jump location previously found in the phase jump locations found at two adjacent times as a first phase jump location.

13. The method according to claim 11 or 12, wherein performing phase jump correction on the service data received from the sending end comprises:
in a case where *ϕ'*(*TS*_{*k*-1}) = *ϕ'*(*TSₖ*), for Data between *TS*_{*k*-1} and *TSₖ*, multiplying *TS*_{*k*-1} and first $\frac{D}{2}$ data in Data by cos(-*ϕ*'(*TS*_{*k*-1})) + *j ·* sin*₍-ϕ'*(*TS*_{*k*-1})), and multiplying *TSₖ* and last $\frac{D}{2}$ data in Data by cos(-*ϕ'(TSₖ*))+ *j* · sin(*-ϕ'*(*TSₖ*));
in a case where *ϕ'*(*TS*_{*k*-1}) *≠ ϕ'*(*TSₖ*), then:
in a case where the phase jump location is not detected, multiplying *TS*_{*k*-1} and first $\frac{D}{2}$ data in Data by cos(-*ϕ*'*(TS*_{*k-*1})) + *j* · sin(*-ϕ'*(*TS*_{*k*-1})) and multiplying *TSₖ* and last $\frac{D}{2}$ data in Data by cos(-*ϕ*'(*TSₖ*)) + *j* · sin(-*ϕ'*(*TSₖ*)), in a case where the phase jump location is detected, compensating data before the phase jump location by using *ϕ'*(*TS*_{*k*-1}) , and compensating the phase jump location and data after the phase jump location by using *ϕ'*(*TSₖ*),
wherein D is the length of data between two adjacent TSs, *TSₖ* is the target TS, *ϕ*(*TSₖ*) represents a phase value of *TSₖ*, *ϕ'*(*TSₖ*) represents a modified phase value of *TSₖ*, *TS*_{*k*-1} is a previous TS of the target TS, *ϕ*(*TS*_{*k*-1}) represents a phase value of *TS*_{*k*-1}*,* and *ϕ'*(*TS*_{*k*-1}) represents a modified phase value of *TS*_{*k*-1}.

14. A phase jump correction device, comprising a generation module, a calculation module, a modification module, and a correction module, wherein
the generation module is configured to generate receiving end Training Sequences (TSs) by using a TS generation mode identical to a TS generation mode used to generate sending end TSs;
the calculation module is configured to acquire the sending end TSs generated by a sending end, and determine a phase value of target TSs according to the acquired sending end TSs and receiving end TSs;
the modification module is configured to modify, according to phase values of a plurality of non-target TSs of a receiving end, the phase value of the target TSs to obtain a modified phase value, wherein the target TSs and the non-target TSs are sending end TSs extracted by the receiving end from service data received from the sending end; and
the correction module is configured to perform, according to the obtained modified phase value, phase jump correction on the service data received from the sending end.

15. A computer-readable storage medium, storing computer-executable instructions to cause the phase jump correction device of claim 14 to execute the steps of the method according to any one of claims 1 to 13.

## Patentansprüche

1. Phasensprungkorrekturverfahren, umfassend:
Akquirieren von Sendeende-Trainingssequenzen (TS), die von einem Sendeende erzeugt wurden, von einem Empfangsende, und Erzeugen von Empfangsende-TS unter Verwendung eines TS-Erzeugungsmodus, der mit einem am Sendeende verwendeten TS-Erzeugungsmodus identisch ist;
Bestimmen des Phasenwerts von Ziel-TS gemäß den akquirierten Sendeende-TS und den erzeugten Empfangsende-TS;
Modifizieren des Phasenwerts der Ziel-TS gemäß Phasenwerten einer Vielzahl von Nicht-Ziel-TS des Empfangsendes, um einen modifizierten Phasenwert zu erhalten, wobei die Ziel-TS und die Nicht-Ziel-TS Sendeende-TS sind, die vom Empfangsende aus Dienstdaten, die vom Sendeende empfangen wurden, extrahiert wurden; und
Durchführen, gemäß dem erhaltenen modifizierten Phasenwert, einer Phasensprungkorrektur an den vom Sendeende empfangenen Dienstdaten.

2. Verfahren nach Anspruch 1, wobei vor dem Durchführen einer Phasensprungkorrektur an den vom Sendeende empfangenen Dienstdaten das Verfahren ferner umfasst: Filtern eines Phasenverschiebungskompensationswerts und Bestimmen einer Phasensprungstelle der Dienstdaten basierend auf einem Filterergebnis und einer voreingestellten Erfassungsschwelle.

3. Verfahren nach Anspruch 1 oder 2, wobei das Bestimmen des Phasenwerts der Ziel-TS gemäß den akquirierten Sendeende-TS und den erzeugten Empfangsende-TS umfasst:
Durchführen einer konjugierten Multiplikation an den Sendeende-TS und den Empfangsende-TS durch das Empfangsende und Durchführen einer Vektoroperation an einem erhaltenen Produkt, um einen Entscheidungsvektor *zₐᵥₑ* zu erhalten; und
Festlegen des Entscheidungsvektors *zₐᵥₑ*, um den Phasenwert der Ziel-TS zu erhalten.

4. Verfahren nach Anspruch 3, wobei das Durchführen der Vektoroperation an dem erhaltenen Produkt zum Erhalten des Entscheidungsvektors *zₐᵥₑ* umfasst:
Berechnen eines Durchschnittswerts von P Vektoren, um einen Entscheidungsvektor zu erhalten ${z}_{ave} = \frac{1}{P} {\sum }_{m = 0}^{P - 1} z \left(n+m\right)$, oder,
Berechnen eines akkumulierten Wertes von P Vektoren, um einen Entscheidungsvektor zu erhalten ${z}_{ave} = {\sum }_{m = 0}^{P - 1} z \left(n+m\right)$, oder,
Durchführen einer Tiefpassfilterung an P Vektoren, um den Entscheidungsvektor *zₐᵥₑ* zu erhalten, wobei der Entscheidungsvektor ${z}_{ave} = {\sum }_{m = 0}^{P - 1} z \left(n+m\right) ⋅ h \left(m\right)$ , h(m) im Entscheidungsvektor ${z}_{ave} = {\sum }_{m = 0}^{P - 1} z \left(n+m\right) ⋅ h \left(m\right)$ ein Filterkoeffizient ist,
wobei P eine Länge eines Sendeende-TS ist;
z(n) = x(n)* * y(n), n = 1,2 ... P, wobei z(n) ein Produkt ist, das durch konjugierte Multiplikation der Sendeende-TS und einer Empfangsende-TS erhalten wird;
x(n),x(n+1), .... ,x(n+P - 1) die Empfangsende-TS; und
y(n),y(n + 1), .... ,y(n+P - 1) die Sendeende-TS ist.

5. Verfahren nach Anspruch 3, wobei das Entscheiden des Entscheidungsvektors *zₐᵥₑ*, um einen Phasenwert der Trainingsdaten des Empfangsendes zu erhalten, umfasst:
in einem Fall, wo $\left|{z}_{ave}^{real}\right| \geq \left|{z}_{ave}^{imag}\right|$ und ${z}_{ave}^{real} \geq 0$, die Phase der Trainingsdaten des Empfangsendes *ϕ* = 0 ist;
in einem Fall, wo $\left|{z}_{ave}^{real}\right| \geq \left|{z}_{ave}^{imag}\right|$ und ${z}_{ave}^{real} < 0$, die Phase der Trainingsdaten des empfangenden Endes *ϕ* = *π* ist;
in einem Fall, wo $\left|{z}_{ave}^{real}\right| < \left|{z}_{ave}^{imag}\right|$ und ${z}_{ave}^{imag} \geq 0$, die Phase der Trainingsdaten des Empfangsendes $φ = \frac{π}{2}$ ist; und
in einem Fall, wo $\left|{z}_{ave}^{real}\right| < \left|{z}_{ave}^{imag}\right|$ und ${z}_{ave}^{imag} < 0$, die Phase der Trainingsdaten des Empfangsendes $φ = - \frac{π}{2}$ ist,
wobei ein Realteil des Entscheidungsvektors ${z}_{ave} {z}_{ave}^{real}$ ist, und ein Imaginärteil des Entscheidungsvektors ${z}_{ave} {z}_{ave}^{imag}$ ist.

6. Verfahren nach Anspruch 3, wobei das Entscheiden des Entscheidungsvektors *zₐᵥₑ*, um einen Phasenwert der Trainingsdaten des Empfangsendes zu erhalten, umfasst:
Berechnen eines Phasenwinkels *phₐᵥₑ* des Entscheidungsvektors *zₐᵥₑ* und Erhalten des Phasenwerts *ϕ* gemäß dem Phasenwinkel *phₐᵥₑ*;
in einem Fall, wo ${ph}_{ave} ∈ \left[-\frac{3}{4}π,-\frac{1}{4}π\right)$, die Phase der Trainingsdaten des Empfangsendes $φ = - \frac{π}{2}$ ist;
in einem Fall, wo ${ph}_{ave} ∈ \left[-\frac{1}{4}π,\frac{1}{4}π\right)$, die Phase der Trainingsdaten des Empfangsendes *ϕ* = 0 ist;
in einem Fall, wo ${ph}_{ave} ∈ \left[\frac{1}{4}π,\frac{3}{4}π\right)$, die Phase der Trainingsdaten des Empfangsendes *ϕ* = $\frac{π}{2}$ ist; und
in einem Fall, wo ${ph}_{ave} ∈ \left[\frac{3}{4}π,π\right) ∪ \left[-π,-\frac{3}{4}π\right)$, die Phase der Trainingsdaten des Empfangsendes *ϕ* = *π* ist.

7. Verfahren nach Anspruch 1 oder 2, wobei das Modifizieren des Phasenwerts der Ziel-TS, um den modifizierten Phasenwert zu erhalten, umfasst:
Modifizieren eines Phasenwerts von *TSk* beim Erfüllen einer Modifizierungsbedingung, wobei die Modifizierungsbedingung ist:
in einem Fall, wo *ϕ*(*TSₖ*) *≠ ϕ'*(*TS*_{*k*-1}) und *ϕ*(*TSₖ*) *≠ ϕ*(*TS*_{*k*+1}) und *ϕ'*(*TS*_{*k*-1}) *≠ ϕ*(*TS*_{*k*+1}), wobei *ϕ*(*TSₖ*) modifiziert wird, wobei *ϕ'*(*TSₖ*) = *ϕ*(*TS*_{*k*+1}) oder *ϕ'*(*TSₖ*) = *ϕ'*(*TS*_{*k*-1}) ist,
wobei *TSₖ* ein Ziel-TS ist, *ϕ (TSₖ)* einen Phasenwert von *TSₖ* darstellt, *ϕ'*(*TSₖ*) einen modifizierten Phasenwert von *TSₖ* darstellt, *TS*_{*k*-1} eine vorherige TS der Ziel-TS ist, *ϕ*(*TS*_{*k*-1}) einen Phasenwert von *TS*_{*k*-1} darstellt, *ϕ'*(*TS*_{*k*-1}*)* einen modifizierten Phasenwert von *TS*_{*k*-1} darstellt, *TS*_{*k*+1} eine nachfolgende TS der Ziel-TS ist, *ϕ*(*TS*_{*k*+1}) einen Phasenwert von *TS*_{*k*+1} darstellt, und *ϕ'*(*TS*_{*k*+1}) einen modifizierten Phasenwert von *TS*_{*k*+1} darstellt.

8. Verfahren nach Anspruch 1 oder 2, wobei das Modifizieren des Phasenwerts der Ziel-TS, um den modifizierten Phasenwert zu erhalten, umfasst:
Modifizieren von *TS*_{*k*+1}, Akkumulieren von vektorakkumulierten Werten *zₐᵥₑ* von den (N-2) TS nach *TSₖ,* um *z*_{*ave*_2} zu erhalten, und Durchführen der Phasenentscheidung an *zₐᵥₑ_₂*, um *ϕ*(*TS'*_{*k*+1}) zu erhalten; und
Modifizieren eines Phasenwerts von *TSₖ* beim Erfüllen einer Modifizierungsbedingung, wobei die Modifizierungsbedingung ist:
in einem Fall, wo *ϕ*(*TSₖ*) *≠ ϕ'*(*TS*_{*k*-1}) und *ϕ*(*TSₖ*) *≠ ϕ*(*TS'*_{*k*+1}) und *ϕ'*(*TS*_{*k*-1}) *≠ ϕ*(*TS'*_{*k*+1}), wobei *ϕ*(*TSₖ*) modifiziert wird, wobei *ϕ'*(*TSₖ*) = *ϕ*(*TS'*_{*k*+1}) oder *ϕ'*(*TSₖ*) = *ϕ'*(*TS*_{*k*-1}),
wobei N die Anzahl der Empfangsende-TS darstellt, *TSₖ* die Ziel-TS ist, *ϕ*(*TSₖ*) einen Phasenwert von *TSₖ* darstellt, *ϕ'*(*TSₖ*) einen modifizierten Phasenwert von *TSₖ* darstellt, *TS*_{*k*-1} eine vorherige TS der Ziel-TS ist, *ϕ*(*TS*_{*k*-1}) einen Phasenwert von *TS*_{*k*-1} darstellt, *ϕ'*(*TS*_{*k*-1}) einen modifizierten Phasenwert von *TS*_{*k*-1} darstellt, *TS*_{*k*+1} eine nachfolgende TS der Ziel-TS ist, *ϕ*(*TS*_{*k*+1}) einen Phasenwert von *TS*_{*k*+1} darstellt, *TS'*_{*k*+1} ein Modifizierungswert von *TS*_{*k*+1} ist, und *ϕ*(*TS'*_{*k*+1}) einen Phasenwert von *TS*_{*k*+1} darstellt.

9. Verfahren nach Anspruch 1 oder 2, wobei das Modifizieren des Phasenwerts der Ziel-TS, um den modifizierten Phasenwert zu erhalten, umfasst:
Modifizieren von *TS*_{*k*+1}, Durchführen einer Tiefpassfilterung an vektorakkumulierten Werten *zₐᵥₑ* der (N-2) TS nach *TSₖ*, um *z*_{*ave*_2} zu erhalten, und Durchführen einer Phasenentscheidung auf *z*_{*ave*_2}, um *ϕ*(*TS'*_{*k*+1}) zu erhalten; und
Modifizieren eines Phasenwerts von der *TSₖ,* wenn eine Modifizierungsbedingung erfüllt ist, wobei die Modifizierungsbedingung ist:
in einem Fall, wo *ϕ*(*TSₖ*) *≠ ϕ'*(*TS*_{*k*-1}) und *ϕ*(*TSₖ*) *≠ ϕ*(*TS'*_{*k*+1}) und *ϕ'*(*TS*_{*k*-1}) *≠ ϕ*(*TS'*_{*k*+1}), wobei *ϕ*(*TSₖ*) modifiziert wird, wobei *ϕ'*(*TSₖ*) = *ϕ*(*TS'*_{*k*+1}) oder *ϕ'*(*TSₖ*) = *ϕ'*(*TS*_{*k*-1}) ist;
wobei unter anderen Bedingungen *ϕ'*(*TSₖ*) = *ϕ*(*TSₖ*),
wobei N die Anzahl der Empfangsende-TS darstellt, *TSₖ* die Ziel-TS ist, *ϕ*(*TSₖ*) einen Phasenwert von *TSₖ* darstellt, *ϕ'*(*TSₖ*) einen modifizierten Phasenwert von *TSₖ* darstellt, *TS*_{*k*-1} eine vorherige TS der Ziel-TS ist, *ϕ*(*TS*_{*k*-1}) einen Phasenwert von *TS*_{*k*-1} darstellt, *ϕ'*(*TS*_{*k*-1}) einen modifizierten Phasenwert von *TS*_{*k*-1} darstellt, *TS*_{*k*+1} eine nachfolgende TS der Ziel-TS ist, *ϕ*(*TS*_{*k*+1}) einen Phasenwert von *TS*_{*k*+1} darstellt, *TS'*_{*k*+1} ein Modifizierungswert von *TS*_{*k*+1} ist, und *ϕ*(*TS'*_{*k*+1}) einen Phasenwert von *TS*_{*k*+1} darstellt.

10. Verfahren nach Anspruch 1 oder 2, wobei das Durchführen einer Phasensprungkorrektur gemäß dem erhaltenen modifizierten Phasenwert an den Dienstdaten, die vom Sendeende empfangen wurden, umfasst:
Multiplizieren (D+P)-Daten, die auf der Ziel-TS zentriert sind, mit cos(-*ϕ*') + *j*· sin(-*ϕ*'),
wobei P die Länge der Sendeende-TS ist, D die Länge der Daten zwischen zwei benachbarten Sendeende-TS ist, *ϕ'* der modifizierte Phasenwert ist und j eine imaginäre Einheit ist.

11. Verfahren nach Anspruch 2, wobei das Filtern des Phasenverschiebungskompensationswerts und das Bestimmen der Phasensprungstelle der Dienstdaten auf der Grundlage des Filterergebnisses und des voreingestellten Erfassungsschwellenwerts umfasst:
Konstruieren eines Filters mit Filterkoeffizienten: [Einsen(1,N1) Nullen(1,N2)-Einsen(1,N1)]/(2*N1)], wobei Einsen(1,N1) 1 Zeile einschließlich N11 darstellt, Nullen (1,N2) 1 Zeile mit N2 0 darstellt, -Einsen (1, N1) 1 Zeile mit N1 -1 darstellt, und N1 und N2 voreingestellte ganze Zahlen größer oder gleich 1 sind;
Filtern des Phasenverschiebungskompensationswerts unter Verwendung des Filterkoeffizienten; und
Erfassen eines nach dem Filtern erhaltenen Filterwerts, und in einem Fall, in dem ein Absolutwert des Filterwerts einen voreingestellten Erfassungsschwellenwert überschreitet, Aufzeichnen der Stelle der Dienstdaten entsprechend dem Filterwert als eine Phasensprungstelle.

12. Verfahren nach Anspruch 11, wobei das Verfahren vor dem Erfassen des Phasenverschiebungskompensationswerts ferner Folgendes umfasst:
Voreinstellen eines Schutzfensters; und
in einem Fall, in dem ein Intervall der Phasensprungstellen, die zu zwei angrenzenden Zeiten gefunden wurden, kleiner ist als die Länge des Schutzfensters, Bestimmen der Phasensprungstelle, die zuvor in den Phasensprungstellen gefunden wurde, die zu zwei angrenzenden Zeiten als eine erste Phasensprungstelle gefunden wurde.

13. Verfahren nach Anspruch 11 oder 12, wobei das Durchführen einer Phasensprungkorrektur an den vom Sendeende empfangenen Dienstdaten umfasst:
in einem Fall, wo *ϕ'*(*TS*_{*k*-1}) = *ϕ'*(*TSₖ*), für Daten zwischen *TS*_{*k*-1} und *TSₖ,* Multiplizieren von *TS*_{*k*-1} und den ersten $\frac{D}{2}$ Daten in Daten mit cos(-*ϕ*'(*TS*_{*k*-1})) + *j·* sin(-*ϕ*'(*TS*_{*k*-1})), und Multiplizieren von *TSₖ* und den letzten $\frac{D}{2}$ Daten in Daten mit cos(*-ϕ'*(*TSₖ*)) + *j·* sin(*-ϕ'*(*TSₖ*));
in einem Fall, wo *ϕ'(TS*_{*k* -1)} ≠ *<p'* (*TSₖ*) ist, dann:
in einem Fall, in dem die Phasensprungstelle nicht erfasst wird, Multiplizieren von *TS*_{*k*-1} und ersten $\frac{D}{2}$ Daten in Daten mit cos(*-ϕ'*(*TS*_{*k*-1})) + *j·* sin(-*ϕ*'(*TS*_{*k*-1})) und Multiplizieren von *TSₖ* und den letzten $\frac{D}{2}$Daten in Daten mit cos(*-ϕ*(*TSₖ*)) + *j·* sin(-*ϕ*'(*TSₖ*)), in einem Fall, in dem die Phasensprungstelle erfasst wird, Kompensieren der Daten vor der Phasensprungstelle unter Verwendung von *ϕ'*(*TS*_{*k*-1}) und Kompensieren der Phasensprungstelle und der Daten nach der Phasensprungstelle unter Verwendung von *ϕ'*(*TSₖ*),
wobei D die Datenlänge zwischen zwei angrenzenden TS ist, *TSₖ* die Ziel-TS ist, *ϕ*(*TSₖ*) einen Phasenwert von *TSₖ* darstellt, *ϕ'*(*TSₖ*) einen modifizierten Phasenwert von *TSₖ* darstellt, *TS*_{*k*-1} eine vorherige TS der Ziel-TS ist, *ϕ*(*TS*_{*k*-1}) einen Phasenwert von *TS*_{*k*-1} darstellt, und *ϕ'*(*TS*_{*k*-1}) einen modifizierten Phasenwert von *TS*_{*k*-1} darstellt.

14. Phasensprungkorrekturvorrichtung, umfassend ein Erzeugungsmodul, ein Berechnungsmodul, ein Modifizierungsmodul und ein Korrekturmodul, wobei
das Erzeugungsmodul dazu konfiguriert ist, Empfangsende-Trainingssequenzen (TS) zu erzeugen, indem ein TS-Erzeugungsmodus verwendet wird, der mit einem TS-Erzeugungsmodus identisch ist, welcher verwendet wird, um Sendeende-TS zu erzeugen;
das Berechnungsmodul dazu konfiguriert ist, die von einem Sendeende erzeugten Sendeende-TS zu akquirieren und einen Phasenwert von Ziel-TS gemäß den akquirierten Sendeende-TS und Empfangsende-TS zu bestimmen;
das Modifizierungsmodul dazu konfiguriert ist, den Phasenwert der Ziel-TS gemäß Phasenwerten einer Vielzahl von Nicht-Ziel-TS eines Empfangsendes zu modifizieren, um einen modifizierten Phasenwert zu erhalten, wobei die Ziel-TS und die Nicht-Ziel-TS Sendeende-TS sind, die vom Empfangsende aus den vom Sendeende empfangenen Dienstdaten extrahiert wurden; und
das Korrekturmodul dazu konfiguriert ist, gemäß dem erhaltenen modifizierten Phasenwert eine Phasensprungkorrektur an den vom Sendeende empfangenen Dienstdaten durchzuführen.

15. Computerlesbares Speichermedium, das computerausführbare Anweisungen speichert, um zu bewirken, dass die Phasensprungkorrekturvorrichtung nach Anspruch 14 die Schritte des Verfahrens nach einem der Ansprüche 1 bis 13 ausführt.

## Revendications

1. Procédé de correction de saut de phase, comprenant :
l'acquisition, par une extrémité de réception, de séquences d'apprentissage (TS) d'extrémité d'envoi générées par une extrémité d'envoi et la génération de TS d'extrémité de réception à l'aide d'un mode de génération de TS identique à un mode de génération de TS utilisé au niveau de l'extrémité d'envoi ;
la détermination de la valeur de phase des TS cibles en fonction des TS d'extrémité d'envoi acquises et des TS d'extrémité de réception générées ;
la modification, en fonction des valeurs de phase d'une pluralité de TS non cibles de l'extrémité de réception, de la valeur de phase des TS cibles pour obtenir une valeur de phase modifiée, les TS cibles et les TS non cibles étant des TS d'extrémité d'envoi, extraites par l'extrémité de réception, de données de service reçues de l'extrémité d'envoi ; et
la réalisation, selon la valeur de phase modifiée obtenue, d'une correction de saut de phase sur les données de service reçues de l'extrémité d'envoi.

2. Procédé selon la revendication 1, avant de réaliser une correction de saut de phase sur les données de service reçues de l'extrémité d'envoi, le procédé comprenant en outre : le filtrage d'une valeur de compensation de décalage de phase et la détermination d'un emplacement de saut de phase des données de service sur la base d'un résultat de filtre et d'un seuil de détection prédéfini.

3. Procédé selon la revendication 1 ou 2, dans lequel la détermination de la valeur de phase des TS cibles en fonction des TS d'extrémité d'envoi acquises et des TS d'extrémité de réception générées comprend :
l'exécution, par l'extrémité de réception, d'une multiplication conjuguée sur les TS d'extrémité d'envoi et les TS d'extrémité de réception et l'exécution d'une opération vectorielle sur un produit obtenu pour obtenir un vecteur de décision *zₐᵥₑ* ; et
la détermination du vecteur de décision *zₐᵥₑ* pour obtenir la valeur de phase des TS cibles.

4. Procédé selon la revendication 3, dans lequel l'exécution de l'opération vectorielle sur le produit obtenu pour obtenir le vecteur de décision *zₐᵥₑ* comprend :
le calcul d'une valeur moyenne de P vecteurs pour obtenir un vecteur de décision ${z}_{ave} = \frac{1}{P} {\sum }_{m = 0}^{P - 1} z \left(n+m\right)$ , ou,
le calcul d'une valeur cumulée de P vecteurs pour obtenir un vecteur de décision ${z}_{ave} = {\sum }_{m = 0}^{P - 1} z \left(n+m\right) ,$ ou,
l'exécution d'un filtrage passe-bas sur P vecteurs pour obtenir le vecteur de décision *zₐᵥₑ*, dans lequel le vecteur de décision ${z}_{ave} = {\sum }_{m = 0}^{P - 1} z \left(n+m\right) ⋅ h \left(m\right)$ , h(m) dans le vecteur de décision ${z}_{ave} = {\sum }_{m = 0}^{P - 1} z \left(n+m\right) ⋅ h \left(m\right)$ étant un coefficient de filtre,
où P est une longueur d'une TS d'extrémité d'envoi ;
z(n) = x(n)* * y(n), n = 1,2 ... P, où z(n) est un produit obtenu par multiplication conjuguée de la TS d'extrémité d'envoi et d'une TS d'extrémité de réception ;
x(n),x(n + 1), .... ,x(n + P - 1) est la TS d'extrémité de réception ; et
y(n),y(n + 1), .... ,y(n + P - 1) est la TS d'extrémité d'envoi.

5. Procédé selon la revendication 3, dans lequel la détermination du vecteur de décision *zₐᵥₑ* pour obtenir une valeur de phase de données d'apprentissage de l'extrémité de réception comprend :
dans un cas où $\left|{z}_{ave}^{real}\right| \geq \left|{z}_{ave}^{imag}\right|$ et ${z}_{ave}^{real} \geq 0$, la phase des données d'apprentissage de l'extrémité de réception est *ϕ* = 0 ;
dans un cas où $\left|{z}_{ave}^{real}\right| \geq \left|{z}_{ave}^{imag}\right|$ et ${z}_{ave}^{real} < 0$, la phase des données d'apprentissage de l'extrémité de réception est *ϕ* = *π* ;
dans un cas où $\left|{z}_{ave}^{real}\right| < \left|{z}_{ave}^{imag}\right|$ et ${z}_{ave}^{imag} \geq 0$, la phase des données d'apprentissage de l'extrémité de réception est $φ = \frac{π}{2}$; et
dans un cas où $\left|{z}_{ave}^{real}\right| < \left|{z}_{ave}^{imag}\right|$ et ${z}_{ave}^{imag} < 0$, la phase des données d'apprentissage de l'extrémité de réception est, $φ = - \frac{π}{2}$,
dans laquelle une partie réelle du vecteur de décision *zₐᵥₑ* est ${z}_{ave}^{real}$ et une partie imaginaire du vecteur de décision *zₐᵥₑ* est ${z}_{ave}^{imag}$.

6. Procédé selon la revendication 3, dans lequel la détermination du vecteur de décision *zₐᵥₑ* pour obtenir une valeur de phase de données d'apprentissage de l'extrémité de réception comprend :
le calcul d'un angle de phase *phₐᵥₑ* du vecteur de décision *zₐᵥₑ* et l'obtention de la valeur de phase *ϕ* en fonction de l'angle de phase *phave* ;
dans un cas où ${ph}_{ave} ∈ \left[-\frac{3}{4}π,-\frac{1}{4}π\right)$, la phase des données d'apprentissage de l'extrémité de réception est $φ = - \frac{π}{2}$;
dans un cas où ${ph}_{ave} ∈ \left[-\frac{1}{4}π,\frac{1}{4}π\right)$, la phase des données d'apprentissage de l'extrémité de réception est *ϕ* = 0 ;
dans un cas où ${ph}_{ave} ∈ \left[\frac{1}{4}π,\frac{3}{4}π\right)$, la phase des données d'apprentissage de l'extrémité de réception est $φ = \frac{π}{2}$; et
dans un cas où ${ph}_{ave} ∈ \left[\frac{3}{4}π,π\right) ∪ \left[-π,-\frac{3}{4}π\right)$, la phase des données d'apprentissage de l'extrémité réceptrice est *ϕ* = *π*.

7. Procédé selon la revendication 1 ou 2, dans lequel la modification de la valeur de phase des TS cibles pour obtenir la valeur de phase modifiée comprend :
la modification d'une valeur de phase de *TSₖ* lorsqu'une condition de modification est satisfaite, la condition de modification étant :
dans le cas où *ϕ*(*TSₖ*) ≠ *ϕ'*(*TS*_{*k*-1}) et *ϕ*(*TSₖ*) ≠ *ϕ*(*TS*_{*k*+1}) et *ϕ'*(*TS*_{*k*-1}) ≠ *ϕ*(*TS*_{*k*+1}), la modification de *ϕ*(*TSₖ*), où *ϕ'*(*TSₖ*) = *ϕ*(*TS*_{*k*+1}) ou *ϕ'*(*TSₖ*) = *ϕ'*(*TS*_{*k*-1}),
où *TSₖ* est une TS cible, *ϕ*(*TSₖ*) représente une valeur de phase de *TSk, ϕ'*(*TSₖ*) représente une valeur de phase modifiée de *TSₖ, TS*_{*k*-1} est une TS précédente de la TS cible, *ϕ*(*TS*_{*k*-1}) représente une valeur de phase de *TS*_{*k*-1}, *ϕ'*(*TS*_{*k*-1}) représente une valeur de phase modifiée de *TS*_{*k*-1}, *TS*_{*k*+1} est une TS suivante de la TS cible, *ϕ*(*TS*_{*k*+1}) représente une valeur de phase de *TS*_{*k*+1} et *ϕ'*(*TS*_{*k*+1}) représente une valeur de phase modifiée de *TS*_{*k*+1}.

8. Procédé selon la revendication 1 ou 2, dans lequel la modification de la valeur de phase des TS cibles pour obtenir la valeur de phase modifiée comprend :
la modification de *TS*_{*k*+1}, l'accumulation des valeurs cumulées vectorielles *zₐᵥₑ* des (N-2) TS après *TSₖ* pour obtenir *z*_{*ave*_2} et l'exécution d'une décision de phase sur *z*_{*ave*_2} pour obtenir *ϕ*(*TS'*_{*k*+1}) ; et
la modification d'une valeur de phase de *TSk* lorsqu'une condition de modification est satisfaite, la condition de modification étant :
dans un cas où *ϕ*(*TSₖ*) ≠ *ϕ'*(*TS*_{*k*-1}) et *ϕ*(*TSₖ*) ≠ *ϕ*(*TS'*_{*k*+1}) et *ϕ'*(*TS*_{*k*-1}) ≠ *ϕ(TS'*_{*k*+1}), la modification de *ϕ*(*TSₖ*), où *ϕ'*(*TSₖ*) = *ϕ*(*TS'*_{*k*+1}) ou *ϕ'*(*TSₖ*) = *ϕ'*(*TS*_{*k*-1}),
où N représente le nombre des TS d'extrémité de réception, *TSₖ* est la TS cible, *ϕ*(*TSₖ*) représente une valeur de phase de *TSₖ, ϕ'*(*TSₖ*) représente une valeur de phase modifiée de *TSₖ, TS*_{*k*-1} est une TS précédente de la TS cible, *ϕ*(*TS*_{*k*-1}) représente une valeur de phase de *TS*_{*k*-1}, *ϕ'*(*TS*_{*k*-1}) représente une valeur de phase modifiée de *TS*_{*k*-1}, *TS*_{*k*+1} est une TS suivante de la TS cible, *ϕ*(*TS*_{*k*+1}) représente une valeur de phase de *TS*_{*k*+1}, *TS'*_{*k*+1} est une valeur de modification de *TS*_{*k*+1} et *ϕ*(*TS'*_{*k*+1}) représente une valeur de phase de *TS*_{*k*+1}*.*

9. Procédé selon la revendication 1 ou 2, dans lequel la modification de la valeur de phase des TS cibles pour obtenir la valeur de phase modifiée comprend :
la modification de *TS*_{*k*+1}, l'exécution d'un filtrage passe-bas sur les valeurs cumulées vectorielles *zₐᵥₑ* de (N-2) TS après *TSₖ* pour obtenir *z*_{*ave*_2} et l'exécution d'une détermination de phase sur *z*_{*ave*_2} pour obtenir *ϕ*(*TS*_{*k*+1}) ; et
la modification d'une valeur de phase de *TSₖ* lorsqu'une condition de modification est satisfaite, la condition de modification étant :
dans un cas où *ϕ*(*TSₖ*) ≠ *ϕ'*(*TS*_{*k*-1}) et *ϕ*(*TSₖ*) ≠ *ϕ*(*TS'*_{*k*+1}) et *ϕ'*(*TS*_{*k*-1}) ≠ *ϕ(TS'*_{*k*+1}), la modification de *ϕ*(*TSₖ*), où *ϕ'*(*TSₖ*) = *ϕ*(*TS'*_{*k*+1}) ou *ϕ'*(*TSₖ*) = *ϕ'*(*TS*_{*k*-1}) *;*
dans d'autres conditions, *ϕ'*(*TSₖ*) = *ϕ*(*TSₖ*),
où N représente le nombre des TS d'extrémité de réception, *TSₖ* est la TS cible, *ϕ*(*TSₖ*) représente une valeur de phase de *TSₖ, ϕ'*(*TSₖ*) représente une valeur de phase modifiée de *TSₖ, TS*_{*k*-1} est une TS précédente de la TS cible, *ϕ*(*TS*_{*k*-1}) représente une valeur de phase de *TS*_{*k*-1}, *ϕ'*(*TS*_{*k*-1}) représente une valeur de phase modifiée de *TS*_{*k*-1}, *TS*_{*k*+1} est une TS suivante de la TS cible, *ϕ*(*TS*_{*k*+1}) représente une valeur de phase de *TS*_{*k*+1}, *TS'*_{*k*+1} est une valeur de modification de *TS*_{*k*+1} et *ϕ*(*TS'*_{*k*+1}) représente une valeur de phase de *TS*_{*k*+1}.

10. Procédé selon la revendication 1 ou 2, dans lequel l'exécution, selon la valeur de phase modifiée obtenue, d'une correction de saut de phase sur les données de service reçues de l'extrémité émettrice comprend :
la multiplication des données (D+P) centrées sur la TS cible par cos(-*ϕ*') + *j*· sin(-*ϕ*'),
où P est la longueur de la TS d'extrémité d'envoi, D est la longueur de données entre deux TS d'extrémité d'envoi adjacentes, *ϕ*' est la valeur de phase modifiée et j est une unité imaginaire.

11. Procédé selon la revendication 2, dans lequel le filtrage de la valeur de compensation de décalage de phase et la détermination de l'emplacement de saut de phase des données de service sur la base du résultat du filtre et du seuil de détection prédéfini comprennent :
la construction d'un filtre avec des coefficients de filtre : [uns(1,N1) zéros(1,N2)-uns(1,N1)]/(2*N1)], où uns(1,N1) représente 1 ligne comprenant N1 1, zéros (1,N2) représente 1 ligne comprenant N2 0, -uns (1,N1) représente 1 ligne comprenant N1 -1 et N1 et N2 sont des nombres entiers prédéfinis supérieurs ou égaux à 1 ;
le filtrage de la valeur de compensation de décalage de phase à l'aide du coefficient de filtre ; et
la détection d'une valeur de filtre obtenue après filtrage et, dans un cas où une valeur absolue de la valeur de filtre dépasse un seuil de détection prédéfini, l'enregistrement de l'emplacement des données de service correspondant à la valeur de filtre en tant qu'emplacement de saut de phase.

12. Procédé selon la revendication 11, dans lequel avant la détection de la valeur de compensation de décalage de phase, le procédé comprend en outre :
le préréglage d'une fenêtre de garde ; et
dans un cas où un intervalle des emplacements de saut de phase trouvés à deux instants adjacents est inférieur à la longueur de la fenêtre de garde, la détermination de l'emplacement de saut de phase précédemment trouvé dans les emplacements de saut de phase trouvés à deux instants adjacents en tant que premier emplacement de saut de phase.

13. Procédé selon la revendication 11 ou 12, dans lequel l'exécution d'une correction de saut de phase sur les données de service reçues de l'extrémité d'envoi comprend :
dans un cas où *ϕ'*(*TS*_{*k*-1}) = *ϕ'*(*TSₖ*), pour les données entre *TS*_{*k*-1} et *TSₖ,* la multiplication de *TS*_{*k*-1} et de la première $\frac{D}{2}$ donnée dans les données par cos(*-ϕ'*(*TS*_{*k*-1})) + *j·* sin(*-ϕ'(TS*_{*k*-1})) et la multiplication de *TSₖ* et de la dernière donnée $\frac{D}{2}$ dans les données par cos(*-ϕ'*(*TSₖ*)) + *j·* sin*(-ϕ'*(*TSₖ*));
dans un cas où *ϕ'*(*TS*_{*k*-1}) *≠ ϕ'*(*TSₖ*), alors :
dans un cas où l'emplacement de saut de phase n'est pas détecté, la multiplication de *TS*_{*k*-1} et de la première donnée $\frac{D}{2}$ dans les données par cos(*-ϕ'*(*TS*_{*k*-1})) + *j·* sin(*-ϕ'*(*TS*_{*k*-1})) et la multiplication de *TSₖ* et de la dernière donnée $\frac{D}{2}$ dans les données par cos(*-ϕ'*(*TSₖ*)) + *j·* sin(*-ϕ'*(*TSₖ*)), dans un cas où l'emplacement de saut de phase est détecté, la compensation des données avant l'emplacement de saut de phase en utilisant *ϕ'*(*TS*_{*k*-1}) et la compensation de l'emplacement de saut de phase des données après l'emplacement de saut de phase en utilisant *ϕ'*(*TSₖ*),
où D est la longueur de données entre deux TS adjacentes, *TSₖ* est la TS cible, *ϕ(TSₖ*) représente une valeur de phase de *TSₖ, ϕ'*(*TSₖ*) représente une valeur de phase modifiée de *TSₖ, TS*_{*k*-1} est une TS précédente de la TS cible, *ϕ*(*TS*_{*k*-1}) représente une valeur de phase de *TS*_{*k*-1} et *ϕ'*(*TS*_{*k*-1}) représente une valeur de phase modifiée de *TS*_{*k*-1}.

14. Dispositif de correction de saut de phase, comprenant un module de génération, un module de calcul, un module de modification et un module de correction, dans lequel
le module de génération est configuré pour générer des séquences d'apprentissage (TS) d'extrémité de réception à l'aide d'un mode de génération de TS identique à un mode de génération de TS utilisé pour générer des TS d'extrémité d'envoi ;
le module de calcul est configuré pour acquérir les TS d'extrémité d'envoi générées par une extrémité d'envoi et déterminer une valeur de phase de TS cibles en fonction des TS d'extrémité d'envoi et des TS d'extrémité de réception acquises ;
le module de modification est configuré pour modifier, selon des valeurs de phase d'une pluralité de TS non cibles d'une extrémité de réception, la valeur de phase des TS cibles pour obtenir une valeur de phase modifiée, les TS cibles et les TS non cibles étant des TS d'extrémité d'envoi, extraites par l'extrémité de réception, de données de service reçues de l'extrémité d'envoi ; et
le module de correction est configuré pour exécuter, en fonction de la valeur de phase modifiée obtenue, une correction de saut de phase sur les données de service reçues de l'extrémité d'envoi.

15. Support de stockage lisible par ordinateur, stockant des instructions exécutables par ordinateur pour amener le dispositif de correction de saut de phase selon la revendication 14 à exécuter les étapes du procédé selon l'une quelconque des revendications 1 à 13.
